(19) **Europäisches Patentamt**
**European Patent Office**
**Office européen des brevets**

(11) **EP 4 779 555 A1**

(12) **EUROPEAN PATENT APPLICATION**
published in accordance with Art. 153(4) EPC

(43) Date of publication:
**22.07.2026 Bulletin 2026/30**

(21) Application number: **24886050.4**

(22) Date of filing: **04.10.2024**

(51) International Patent Classification (IPC):
*G06T 1/60* (2006.01)          *G06T 1/20* (2006.01)
*G06T 3/4076* (2024.01)          *G06T 3/4046* (2024.01)
*H04N 21/45* (2011.01)

(52) Cooperative Patent Classification (CPC):
**G06V 10/764; G06T 1/20; G06T 1/60; G06T 3/40;**
**G06T 3/4046; G06T 3/4076; G06T 7/0002;**
**H04N 21/45;** G06T 2207/30168

(86) International application number:
**PCT/KR2024/015106**

(87) International publication number:
**WO 2025/095373 (08.05.2025 Gazette 2025/19)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **31.10.2023 KR 20230148431**

(71) Applicant: **Samsung Electronics Co., Ltd.**
**Suwon-si, Gyeonggi-do 16677 (KR)**

(72) Inventors:
• **JEONG, Younghoon**
  **Suwon-si, Gyeonggi-do 16677 (KR)**
• **LEE, Hyunseung**
  **Suwon-si, Gyeonggi-do 16677 (KR)**
• **KIM, Donghyun**
  **Suwon-si, Gyeonggi-do 16677 (KR)**
• **CHOI, Kyuha**
  **Suwon-si, Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(54) **IMAGE PROCESSING DEVICE AND OPERATION METHOD THEREOF**

(57)     An image processing device is configured to store a cumulative quality of content comprising a plurality of input images based on a viewing frequency of the content, determine a model storing condition based on the viewing frequency and the cumulative quality, obtain a reference model corresponding to the model storing condition, store the reference model in a memory, and generate a target model corresponding to a first image by training the reference model stored in the memory by using training data corresponding to a quality of the first image.

FIG. 1

EP 4 779 555 A1

**Description**

TECHNICAL FIELD

One or more embodiments of the disclosure relates to an image processing device and an operating method of the image processing device. More particularly, the embodiment of the disclosure relates to an image processing device for outputting a high-resolution image by performing image-quality processing on a low-resolution image, and an operating method of the image processing device.

BACKGROUND ART

With advancements in deep learning technology, various forms of learning-based upscaling methods have been developed. A learning-based upscaling method exhibits excellent performance when quality characteristics of a training image are similar to those of an input image to be actually processed, but encounters a domain gap problem in which image quality performance deteriorates significantly when characteristics of an image to be processed are different from input image quality assumed during training (e.g., model configured based on assumed input image quality).

To address this problem, on-device learning research has been conducted to process and adapt an artificial intelligence (AI) model to input data. On-device learning may refer to an operation of training a neural network model embedded in a device, in real time, by collecting information and performing computations on the device itself without going through a cloud server. The device that performs on-device learning may be referred to as an edge device. In an on-device learning research field, a paper on image processing and image quality enhancement (ZSSR, CVPR 2018, Zero-Shot Super-Resolution using Deep Internal Learning, hereinafter referred to as 'Paper 1') has been recently published.

Paper 1 is directed to ZSSR, which is a technique for constructing a database (DB) by adaptively using an input image itself according to degradation characteristics of the input image and increasing a size of an image by using a model trained using the DB. Because ZSSR creates a new DB adaptively for each input image from scratch and trains a model by using the new DB, the ZSSR has drawbacks in that this technique suffers from high computational complexity of learning, and it is difficult for the ZSSR to be applied to a video with severe quality variations.

In order to improve these problems, another paper (MetaSR, ECCV 2021, Fast Adaptation to Super-Resolution Networks via Meta-Learning, hereinafter referred to as 'Paper 2') has been published. Paper 2 presents a technique for training an initial meta model from an external DB and finding a model suitable for features of an input image via transfer learning in order to reduce the computational complexity of learning in ZSSR. However, because the technique in Paper 2 uses only a single meta model, the single meta model has a performance limitation in that all features of various input images are included therein. Therefore, in an environment using a low-capacity network such as in an edge device, such a limitation of the meta model becomes a factor that limits the performance of on-device learning.

Furthermore, there is a method of selecting a meta model suitable for characteristics of each input image by using a plurality of meta models adapted to characteristics of input images, but it is impossible to train models by predicting all real input images.

Accordingly, research is being conducted to reduce the amount of computation and resource consumption required to train a model having a neural network, and to shorten the time required for training, on an edge device having limited computational resources and internal memory.

DISCLOSURE OF INVENTION

SOLUTION TO PROBLEM

According to an aspect of the disclosure, an image processing device comprises: memory storing one or more instructions; and one or more processors including processing circuitry, operatively coupled to the memory.

According to an aspect of the disclosure, the one or more instructions, when executed by the one or more processors individually or collectively, cause the image processing device to store a cumulative quality of content comprising a plurality of input images based on a viewing frequency of the content.

According to an aspect of the disclosure, the one or more instructions, when executed by the one or more processors individually or collectively, cause the image processing device to determine a model storing condition based on the viewing frequency and the cumulative quality.

According to an aspect of the disclosure, the one or more instructions, when executed by the one or more processors individually or collectively, cause the image processing device to obtain a reference model corresponding to the model storing condition, store the reference model in the memory.

According to an aspect of the disclosure, the one or more instructions, when executed by the one or more processors individually or collectively, cause the image processing device to generate a target model corresponding to a first image by training the reference model stored in the memory by using training data corresponding to a quality of the first image.

According to an aspect of the disclosure, an operating method of an image processing device, the operating method comprises: storing a cumulative quality of content comprising a plurality of input images based on a viewing frequency for the content; determining a model storing condition, based on the viewing frequency and the cumulative quality; obtaining a reference model corresponding to the model storing condition; storing the reference model in the memory; and generating a target model corresponding to a first image by training the stored reference model by using training data corresponding to a quality of the first image.

BRIEF DESCRIPTION OF DRAWINGS

FIG. 1 is a diagram illustrating an image processing device according to one or more embodiments of the disclosure.

FIG. 2A is an example of a model training process illustrated in an image quality information graph.

FIG. 2B is a graph illustrating real-time quality changes in a plurality of frame images included in video content, according to one or more embodiments of the disclosure.

FIG. 3 is a flowchart of an operating method of an image processing device, according to one or more embodiments of the disclosure.

FIG. 4 is an example illustrating classification information according to one or more embodiments of the disclosure.

FIG. 5 is an example illustrating a stored cumulative quality of input images, according to one or more embodiments of the disclosure.

FIG. 6 is an example illustrating an operation in which an image processing device stores a second reference model, according to one or more embodiments of the disclosure.

FIG. 7 is an example of a first reference model and a second reference model stored in a memory of an image processing device, according to one or more embodiments of the disclosure.

FIG. 8 illustrates a configuration of an image processing device according to one or more embodiments of the disclosure.

FIG. 9 is a diagram specifically illustrating a model trainer of an image processing device, according to one or more embodiments of the disclosure.

FIG. 10 is a flowchart of an operating method of an image processing devices and a server, according to one or more embodiments of the disclosure.

FIG. 11 is a block diagram of an image processing device according to one or more embodiments of the disclosure.

FIG. 12 is a detailed block diagram of an image processing device according to one or more embodiments of the disclosure.

MODE FOR THE INVENTION

Throughout the disclosure, the expression "at least one of a, b or c" indicates only a, only b, only c, both a and b, both a and c, both b and c, all of a, b, and c, or variations thereof.

One or more embodiments of the disclosure will be described more fully hereinafter with reference to the accompanying drawings so that the embodiment may be easily implemented by one of ordinary skill in the art. However, the disclosure may be implemented in different forms and should not be construed as being limited to one or more embodiments of the disclosure set forth herein.

The terminology used herein may be a general term currently widely used in the art based on functions described in the disclosure, but it may mean various other terms according to an intention of a technician engaged in the art, precedent cases, advent of new technologies, etc. Thus, the terms used herein should be defined not by simple appellations thereof but based on the meaning of the terms together with the overall description of the disclosure.

In addition, the terms used herein are only used to describe a particular embodiment of the disclosure, and are not intended to limit the disclosure.

Throughout the specification, it will be understood that when a part is referred to as being "connected" or "coupled" to another part, it may be "directly connected" to or "electrically coupled" to the other part with one or more intervening elements therebetween.

The use of the terms "the" and similar referents used in the specification, especially in the following claims, are to be construed to cover both the singular and the plural. Furthermore, operations of a method according to the disclosure described herein may be performed in any suitable order unless the order of the operations is clearly specified herein. The disclosure is not limited to the described order of the operations.

Expressions such as "in one or more embodiments of the disclosure" described in various parts of this specification do not necessarily refer to the same embodiment(s).

One or more embodiments of the disclosure may be described in terms of functional block components and various processing operations. Some or all of such functional blocks may be implemented by any number of hardware and/or software components that execute specific functions. For example, functional blocks of the disclosure may be implemented by one or more microprocessors or by circuit components for performing certain functions. Furthermore, for example, functional blocks according to the disclosure may be implemented in various programming or scripting languages. The functional blocks may be implemented using various algorithms executed by one or more processors. Furthermore, the disclosure may employ techniques of the related art for electronics configuration, signal processing, and/or data processing. The terms such as "mechanism", "element", "means", and "construction" may be used in a broad sense and are not limited to mechanical or physical components.

Furthermore, connecting lines or connectors shown in various figures are intended to represent exemplary functional relationships and/or physical or logical couplings between components in the figures. In an actual device, connections between components may be represented by many alternative or additional functional relationships, physical connections, or logical connections.

As used herein, the term "unit" or "module" indicates a unit for processing at least one function or operation and may be implemented using hardware or software or a combination of hardware and software. The hardware components may be referred to as circuitry.

In the specification, the processor may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

Furthermore, in the specification, the term "user" refers to a person who uses an image processing device and may include a consumer, an evaluator, a viewer, an administrator, or an installation engineer. Also, in the specification, a "manufacturer" may refer to a manufacturer that manufactures an image processing device and/or components included in the image processing device.

As used herein, an 'image' may refer to a still image, a picture, a frame, a moving image composed of a plurality of consecutive still images, or a video.

As used herein, a 'neural network' is a representative example of an artificial neural network model that simulates brain nerves, and is not limited to an artificial neural network model using a specific algorithm. A neural network may also be referred to as a deep neural network.

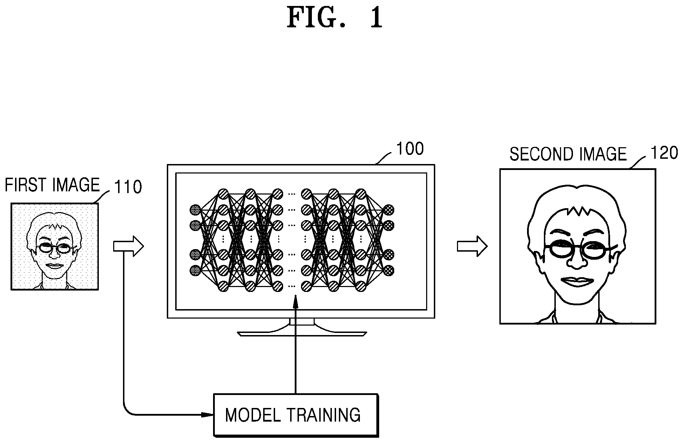

FIG. 1 is a diagram illustrating an image processing device according to one or more embodiments of the disclosure.

Referring to FIG. 1, an image processing device 100 may be an electronic device capable of processing and outputting an image. The image processing device 100 may be implemented as various forms including a display. For example, the image processing device 100 may be implemented as a variety of electronic devices, such as a television (TV), a mobile phone, a tablet personal computer (PC), a digital camera, a camcorder, a laptop computer, a desktop computer, an e-book reader, a digital broadcasting terminal, a personal digital assistant (PDA), a portable multimedia player (PMP), a navigation device, an MP3 player, a wearable device, etc., or any other suitable device known to one of ordinary skill in the art.

The image processing device 100 may receive and output various types of content generated by content providers via an external device. Content may include video content such as still images, moving images, etc., audio content, subtitle content, other additional information, etc. A content provider may refer to a terrestrial broadcasting station, a cable broadcasting station, a satellite broadcasting station, an Internet Protocol (IP) TV service provider, or an over-the-top (OTT) service provider that provides various types of content to consumers. The external device may be implemented as various forms of source devices, such as PCs, set-top boxes (e.g. a terrestrial set-top box, a cable set-top box, a satellite set-top box, and an Internet set-top box), Blu-ray disc players, mobile phones, game consoles, home theaters, audio players, universal serial bus (USB), etc. The external device may be connected to the image processing device 100 via an input/output (I/O) interface such as a high-definition multimedia interface (HDMI) and provide various content to the image processing device 100. Alternatively, the external device may be connected to the image processing device 100 via a wired or wireless communication network such as Wi-Fi or wireless local area network (WLAN) and provide various types of content to the image processing device 100.

In an example, the OTT may deliver streamed content over the internet to internet-connected devices. OTT services may be provided by third parties different from a manufacturer of the image processing device 100 and an internet service provider (ISP). The OTT may provide streaming content using subscription-based video on demand (SVoD) services, also known as "streaming platforms" that offer access to film and television content. In an example, the image processing device 100 may include an internal tuner or is connected to an external tuner that provides live broadcast content. In an example, the image processing device 100 may provide a user interface for selection of the live broadcast content or the streamlining content. In an example, the image processing device 100 may provide picture-in-picture features in which one portion for a display screen displays content from a first source (e.g., streaming content from OTT), and another portion of the display screen display content from a second source (e.g., live broadcast content from a tuner).

The image processing device 100 may output video content. The video content may include a plurality of frame images. The video content is captured, compressed, transmitted, and restored and output by the image processing device 100. Due to limitations in the physical characteristics of a device used to capture a video and its limited bandwidth, information is lost and image distortion may occur. The quality of the video content may deteriorate due to the image distortion. The video content may have different qualities depending on the degree of image distortion. In an example, the image distortion may be caused by compression of the video content or a reduction in resolution of the video content such that the video content may be streamed to the image processing device 100.

According to an embodiment of the disclosure, the image processing device 100 may process the quality of an image. The image processing device 100 may process video content of which the image quality of the video content has been degraded due to image distortion. For example, the image processing device 100 may obtain a second image 120 (an output image) by performing image quality processing on a first image 110 (an input image). For example, the image processing device 100 may obtain a high-resolution (or high-quality) output image by upscaling a low-resolution (or low-quality) input image by using an image quality processing model. The input image may be an image that is streamed to the image processing device 100 or transmitted to the image processing device 100 as a live broadcast. According to an embodiment of the disclosure, the image quality processing model may include a neural network model trained based on an obtained neural network model by using training data corresponding to the first image 110 and generated based on the quality of the first image 110.

According to an embodiment of the disclosure, the image processing device 100 may train the image quality processing model embedded therein in real time on the image processing device 100 itself. For example, the image processing device 100 may obtain quality information of the first image 110, obtain training data corresponding to the quality of the first image 110, obtain an image quality processing model to process the quality of the first image 110, and update the image quality processing model by using the training data. According to an embodiment of the disclosure, the image processing device 100 may obtain the second image 120 by processing the quality of the first image 110 by using the updated image quality processing model (e.g., the second image is trained after the image quality processing model is trained with the training data).

According to an embodiment of the disclosure, an image quality processing model may be referred to as a meta model. A meta model may refer to a neural network model that is able to quickly learn or generalize to new data. The meta model may be pre-trained using training data corresponding to various quality information stored in a cloud and then used to process the quality of a real image in the image processing device 100. For example, the meta model may be pre-trained with a corpus dataset that includes a variety of image subjects and image scenes. The image processing device 100 may reduce a domain gap by training the meta model by using real images as training data. The image processing device 100 may generate a meta model that is adaptive to an input image.

In an example, to train a neural network model, training data consisting of pairs of low- and high-resolution images. For example, a pair of images may include a first version of an image at a low-resolution and a second version of an image at a high-resolution. The neural network model may be trained through a process of updating parameters of the neural network model to reduce a difference (training error or loss) between an image output by processing the low-resolution images in the training data via the neural network model and the high-resolution images in the training data. The process of updating the parameters of the neural network model may involve multiple iterations. For example, the image processing device 100 may perform multiple iterations to update an image quality processing model pre-stored in an internal memory to a model corresponding to a specific quality.

The training time of a neural network model may be determined based on the computing power of a device used (e.g., the number of computational resources, a bit width, and a memory capacity), the complexity of an algorithm used (e.g., precision of a quality analyzer and type of model training algorithm), the size (or depth) of a neural network, the size of training data, the type of the neural network model, etc. Accordingly, a first image processing device with higher computing power than a second image processing device may train a neural network model faster than the second image processing device.

Because the image processing device 100 trains the neural network model by using finite computational resources (e.g., a central processing unit (CPU), a neural processing unit (NPU), a digital signal processor (DSP), etc.) and internal memory compared to a server, training on the image processing device 100 is slower than on a server. For example, training on the image processing device 100 may be slowed down as the number of iterations for updating the image quality processing model to a model corresponding to a specific quality increases. For example, the greater the difference between an image quality processing model pre-stored in the image processing device 100 and a specific quality, the lower the training speed. For example, when a small number of image quality processing models are pre-stored in the image processing device 100, there are likely to be only a few image quality processing models that are close to providing a specific quality, and thus, the training speed may be reduced. The slower the training of a meta model on an input image, the more difficult it is to generate a meta model that is adaptive to real-time quality changes in the input image, and thus, upscaling performance may decrease.

A method of speeding up training of a neural network model performed on the image processing device 100 is described.

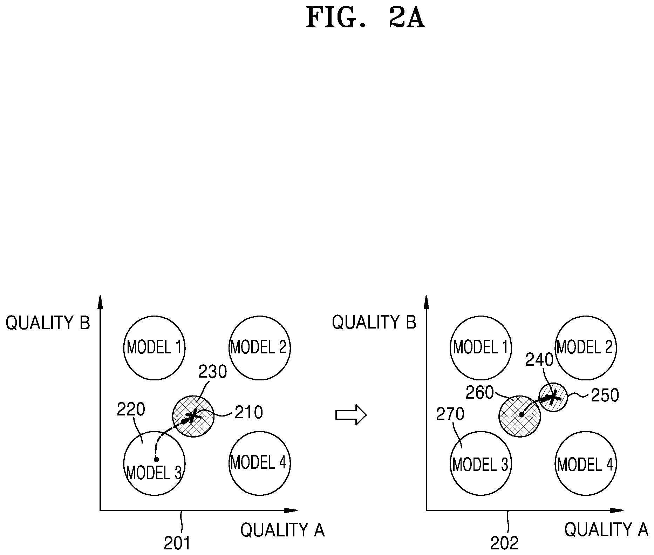

FIG. 2A is an example of a model training process illustrated in an image quality information graph.

FIG. 2A is a two-dimensional (2D) graph showing results of analyzing quality of an input image and models for processing the quality of the input image on a quality plane. The graph shows a process of generating an updated model by training a model to process the quality of the input image. In an example, the quality of the input image may be analyzed using a quality analyzer.

Referring to FIG. 2A, graph 1 (201) and graph 2 (202) are quality information graphs where the quality of the input image is divided into two quality elements and a horizontal axis represents quality element A, and a vertical axis represents quality element B. For example, the quality elements may include kernel sigma, compression quality factor (QF), etc. A kernel sigma value may be a value indicating a blur quality of an image, and a QF may be a value indicating the degree of degradation due to compression.

The image processing device 100 may generate a model for processing the quality of the input image in correspondence to a quality value 210 of the input image. In graph 1 (201), X represents the quality value 210 of the input image, and model 1, model 2, model 3, and model 4 represent reference models 220. A checkered circle symbol represents a model 230 updated from the reference model 220. An arrow indicates a direction of the update of the reference model 220, and an end of the arrow points to the updated model 230. Model 1, model 2, model 3, and model 4 may be image quality processing models pre-trained based on training data having different quality values. The updated model 230 is an image quality processing model with adjusted parameters, which is trained in correspondence to the quality value 210 of the input image based on the reference model 220. The updated model 230 may be a target model corresponding to the quality value 210 of the input image or a meta model adaptive to the input image. For example, the target model may be trained to improve the quality value 210 (e.g., image blur) of the input image.

The image processing device 100 may generate the updated model 230 by updating parameters of model 3 in correspondence to the quality value 210 of the input image, based on model 3 that is a reference model closest to the quality value 210 of the input image among the reference models 220 including model 1, model 2, model 3, and model 4. For example, the quality value may have Quality A at value X1 and Quality B value Y2. Furthermore, Model 3 may output an image with Quality A at value X0 and Quality B at value Y0. The distance between the quality value 210 and the quality of an image output by Model 3 may be determined as

$$\sqrt{(X1 - X0)^2 + (Y1 - Y0)^2}$$ (e.g., Pythagorean theorem). Accordingly, based on this calculation, Model 3 may be determined to have a closer distance to quality value 210 than Models 1, 2, and 4. The updated model 230 may have high image quality processing performance for the input image. In the disclosure, a reference model closest to a quality value of an image may refer to a model having parameters that are closest to the quality value of the image. In addition, a method of selecting a reference model is not limited to selecting a reference model that is closest to the quality value 210 of the input image. For example, the reference model may be selected by considering a weight for each model.

In an example, the reference models 220 in graph 1 (201) may be referred to as a first reference model in graph 2 (202), and the updated model 230 in graph 1 201 may be referred to as a second reference model in graph 2 (202).

In an embodiment of the disclosure, a first reference model may be a reference model pre-stored in the image processing device 100. The first reference model may be a model pre-trained on a server or an external device and stored in the image processing device 100. The first reference model may be a meta model that is adaptive to an input image as it is trained using the input image obtained by the image processing device 100. The first reference model is stored in a non-volatile memory (e.g., NAND flash) and may not be reset even when the image processing device 100 is turned on or off.

In an embodiment of the disclosure, a second reference model may be a model updated from the first reference model. The second reference model may have parameters adjusted from the first reference model in correspondence to the quality of the input image (e.g., the adjusted parameters improve the performance of the second reference model for improving the quality of the image). The image processing device 100 may generate the second reference model with parameters adjusted from the first reference model in order to process the quality of an input image being input in real time. For example, the second reference model may be a target model for the quality value (e.g., the quality value 210) of a specific input image with a viewing history. The second reference model is stored in a volatile memory (e.g., dynamic random access memory (DRAM)) and, unlike the first reference model, may be reset when the image processing device 100 is turned on or off.

In an embodiment of the disclosure, the image processing device 100 may store some of the generated second reference models in a non-volatile memory. The second reference models stored in the non-volatile memory may not be reset even when the image processing device 100 is turned on or off. The non-volatile memory may correspond to internal memory of the image processing device 100 or a DB in the server.

In an embodiment of the disclosure, the image processing device 100 may store a second reference model used to process the quality of an image frequently viewed by a user in the non-volatile memory. The image processing device 100 may use the additionally stored second reference model to quickly generate a target model for the quality of the frequently viewed image.

The additionally stored second reference model may be an image quality processing model with parameters adjusted to process the quality of the image frequently viewed by the user. Accordingly, the number of iterations for adjusting the parameters of the image quality processing model in correspondence to the quality of the frequently viewed image may be reduced and the training time may be reduced. In one or more example, an image may be categorized as frequently viewed if the image is view more than a determined number of times within a determined interval.

In graph 2 202, the X represents a quality value 240 of an input image, model 1, model 2, model 3, and model 4 represent first reference models 270, a checkered circle symbol represents a second reference model 260, and a hatched circle symbol represents a model 250 updated from the second reference model 260 (or a target model 250 for the quality value 240 of the input image). An arrow indicates a direction of update of the second reference model 260. The second reference model 260 may correspond to the target model (the updated model 230) for the quality value 210 of the input image viewed in the past. A distance between the second reference model 260 and the target model 250 may be shorter than a distance between the first reference model 270 and the target model 250.

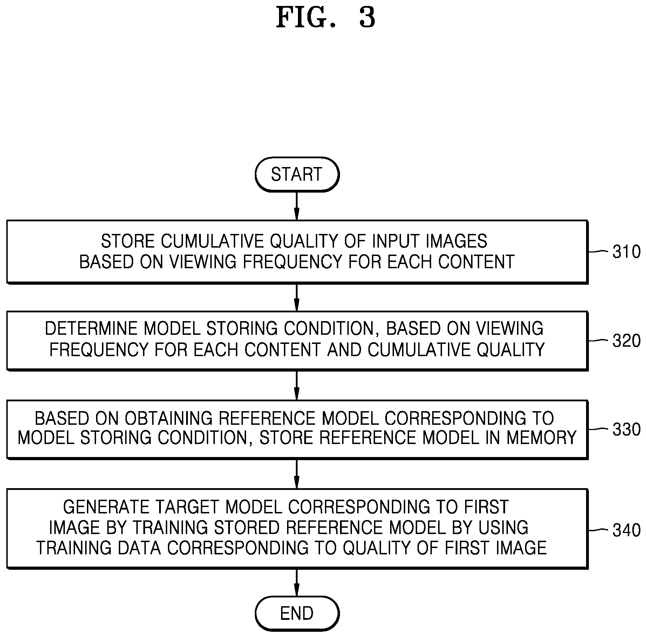

In an embodiment of the disclosure, when the second reference model 260 corresponding to the quality of the frequently viewed image is additionally stored in the non-volatile memory of the image processing device 100, the image processing device 100 may use the second reference model 260. The second reference model 260 is a reference model that outputs an image having a quality that is closest to the quality value 240 of the input image. Because the image processing device 100 uses the second reference model 260 to generate the target model 250, the number of iterations for training may be reduced, the time taken to generate the target model 250 may be reduced, and the training speed of the neural network may be advantageously increased. Accordingly, the image processing device 100 may quickly generate a target model in response to real-time quality changes in the input image and output quality-processed image for the user's preferred content. A method of determining conditions of the second reference model stored in the non-volatile memory is further described with reference to FIG. 3.

In addition, frequently viewed images may be classified by content, resolution, or object. Considering a cumulative frequency of a quality of a frequently viewed image, a second reference model corresponding to a quality accumulated at a high frequency may be stored in a non-volatile memory. For example, a quality of the frequently viewed image may be accumulated for each content, resolution, or object. Accordingly, a second reference model may be additionally stored for each content, resolution, or object.

In addition, the image processing device 100 may analyze each input image to obtain another quality element in addition to kernel sigma and QF of the corresponding input image. For example, the image processing device 100 may analyze an input image to further obtain a quality element indicating the degree of noise included in the input image. In this case, a quality value of each input image obtained by the image processing device 100 may be represented as a three-dimensional (3D) graph showing kernel sigma, QF, and noise level on three axes.

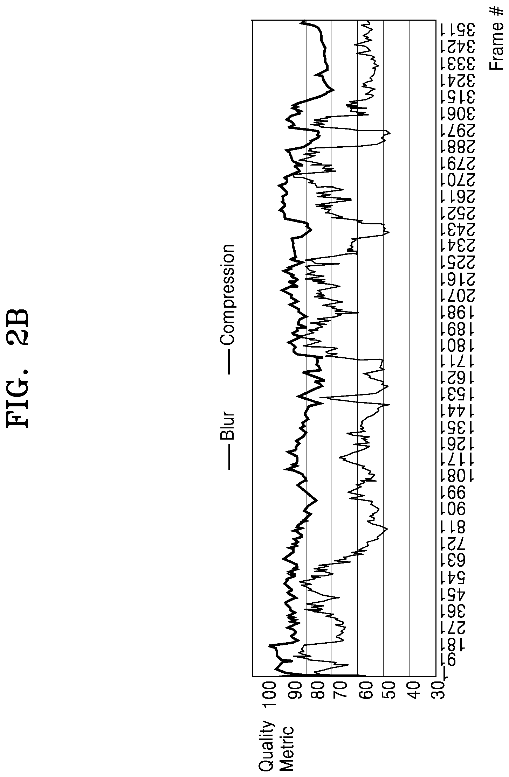

When the number of quality element axes increases to k, the amount of computation may increase by k orders of magnitude or more (e.g., k is a natural number) because a target model needs to be generated from a k-dimensional quality information graph. For example, when generating a target model from a 3D quality information graph, a reference model may be updated in correspondence to quality element C as well as quality element A and quality element B. Accordingly, the amount of computation may increase by one order of magnitude or more compared to the case of generating a target model from a 2D quality information graph. According to an embodiment of the disclosure, the image processing device 100 may quickly generate a target model even when the number of quality element axes increases to k. FIG. 2B is a graph illustrating real-time quality changes in a plurality of frame images included in video content, according to an embodiment of the disclosure.

Referring to FIG. 2B, a horizontal axis on the graph represents numbers assigned to a plurality of frame images, and a vertical axis represents quality levels of the frame images. The graph shows changes in blur quality and compression QF of the frame images.

As seen in the graph, the quality of the video content may vary in real time frame by frame. For example, the video content may have about 3500 frames, and the quality of the video content may vary between 50 % and 90 % over time. For example, the video content may be OTT content and have a bit rate of 4 megabits per second (Mbps).

In an embodiment of the disclosure, for image quality processing on the video content, the image processing device 100 may generate a meta model that is adaptive to a quality changing in real time for each frame. The image processing device 100 needs to quickly perform training in order to generate a meta model that is adaptive to each of the qualities that change in real time. The image processing device 100 may provide upscaled image quality for the video content by generating a meta model that is adaptive to each of the qualities that change in real time.

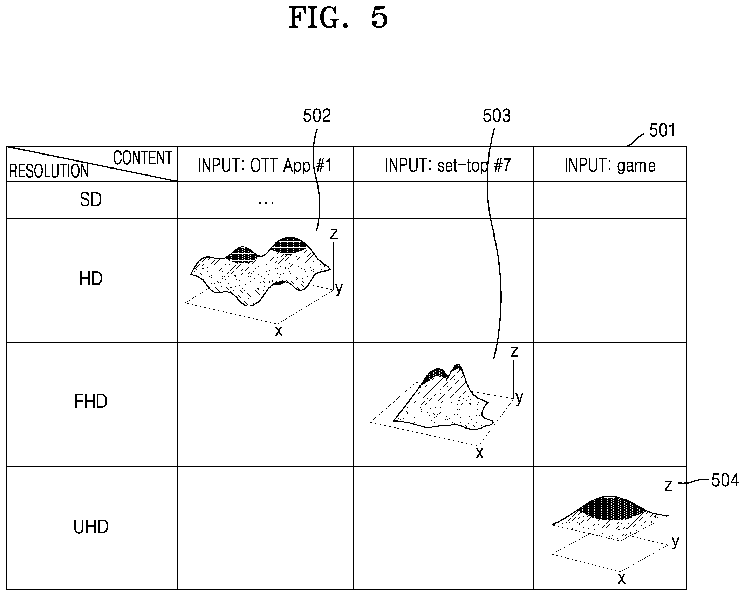

Moreover, according to an embodiment of the disclosure, the image processing device 100 may store a cumulative quality that is an accumulation of real-time changing qualities in correspondence to the video content. A cumulative quality graph is further described with reference to FIG. 5.

FIG. 3 is a flowchart of an operating method of an image processing device, according to an embodiment of the disclosure.

Referring to FIG. 3, in operation 310, according to an embodiment of the disclosure, the image processing device 100 may store a cumulative quality of input images based on a viewing frequency for each content. The viewing frequency for each content may correspond to a user's preference for each content (e.g., number of times content viewed within a determined interval).

In an embodiment of the disclosure, a quality of an input image may mean an image quality or a degree of degradation in the input image. The quality of the input image may mean at least one of compression quality, blur quality, or noise for the input image. In an embodiment of the disclosure, a cumulative quality of input images may refer to information obtained by accumulating qualities of a plurality of frame images included in video content.

In an embodiment of the disclosure, the image processing device 100 may store a cumulative quality of input images corresponding to content with a high viewing frequency. The content with a high viewing frequency may correspond to the user's preferred content. The image processing device 100 may obtain information about content having a high viewing frequency and content having a low viewing frequency based on the user's viewing history accumulated over a defined period of time. In an embodiment of the disclosure, the image processing device 100 may store a cumulative quality of input images corresponding to content with a high viewing frequency, and may not store a cumulative quality of input images corresponding to content with a low viewing frequency. A cumulative quality may be stored in a memory only for frequently viewed content over a medium or long viewing period (e.g., a month). In an embodiment of the disclosure, the image processing device 100 may store in a non-volatile memory a reference model corresponding to content with a high viewing frequency according to operation 330 as described below.

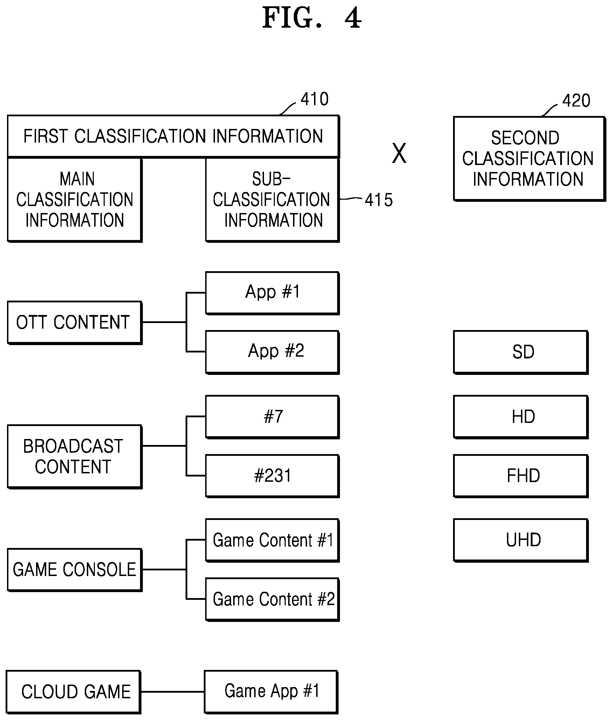

In an embodiment of the disclosure, the image processing device 100 may store a cumulative quality of input images for each type of classification information. For example, classification information may include at least one of a type of content, a resolution of the content, or a combination of the type of the content and the resolution of the content. For example, the cumulative quality of the input images may be stored for each type of content, each resolution of content, or a combination of type of content and resolution of content. Classification information is further described with reference to FIG. 4.

In an embodiment of the disclosure, the type of content may be determined based on an external device connected to the image processing device 100. For example, content may include OTT content received from an OTT content provider via a short-range wireless communication such as Wi-Fi or WLAN, broadcast content such as real-time broadcast programs received from a terrestrial broadcasting station or cable broadcasting station connected via a set-top box or a tuner, game content provided by a game console device, or cloud game content provided by a cloud game provider via a wireless communication. In an example, the content may be further classified by a content provider, and for OTT content, it may vary by OTT content provider (e.g., App #1 and App #2), and for broadcast content, it may vary by broadcast channel (e.g., channel #7 and channel #231), and for game content, it may vary by game content provider. In an embodiment of the disclosure, the image processing device 100 may store reference models for each type of content in the non-volatile memory according to operation 330 as described below.

In an embodiment of the disclosure, the resolution of content may include Standard Definition (SD), High Definition (HD), Full HD (FHD), and Ultra HD (UHD). The resolution of the content, even for the same type of content, may vary depending on at least one of a transmission speed of a network, a type of subscription product, a genre of broadcast content, or a resolution of the original content. In an embodiment of the disclosure, the image processing device 100 may store a reference model for each resolution of content in the non-volatile memory according to operation 330 as described below.

In an embodiment of the disclosure, the image processing device 100 may store a cumulative quality of input images corresponding to content with a high viewing frequency for each type of classification information. The cumulative quality of the input images corresponding to the preferred content is stored for each content, and may be stored separately for each resolution of the content. The cumulative quality stored in the image processing device 100 is further described with reference to FIG. 5.

In operation 320, according to an embodiment of the disclosure, the image processing device 100 may determine a model storing condition based on the viewing frequency for each content and the cumulative quality.

In an embodiment of the disclosure, the model storing condition may refer to a condition of a reference model to be stored in the non-volatile memory. The model storing condition may refer to a condition of an image quality processing model for processing quality corresponding to frequently viewed content. The reference model may be an image quality processing model pre-trained using training data. By adjusting parameters of the reference model to correspond to the quality of the input image, a target model (or a meta model adaptive to the input image) for improved or enhanced image quality processing of the input image may be generated.

In an embodiment of the disclosure, reference models may include a first reference model pre-stored in the image processing device 100. The first reference model may be stored in the non-volatile memory. In an embodiment of the disclosure, the first reference model may include a reference model for each type of content. For example, the first reference model may include a reference model for OTT content, a reference model for broadcast content, a reference model for game content, etc. In an example, in an embodiment of the disclosure, the first reference model may include a reference model for each resolution. For example, the first reference model may include a reference model for SD resolution, a reference model for HD resolution, a reference model for FHD resolution, a reference model for UHD resolution, etc. In addition, in an embodiment of the disclosure, the first reference model may include a reference model for each object, such as reference models for a face, a letter, a general area, etc.

In an embodiment of the disclosure, the reference models may include a second reference model trained in correspondence to the quality of the input image based on the first reference model. The second reference model may be composed of a plurality of second reference models corresponding to a plurality of input images included in video content. The second reference model may be stored in a volatile memory. In an embodiment of the disclosure, the model storing condition may refer to a condition of a reference model to be stored in the non-volatile memory among the plurality of second reference models updated from the first reference model in correspondence to the plurality of input images. Because the first reference model and the second reference model have been described with reference to FIG. 2A, descriptions already provided above are omitted herein.

In an embodiment of the disclosure, the image processing device 100 may determine a model storing condition corresponding to a second reference model to be frequently used by the image processing device 100. In an embodiment of the disclosure, a second reference model to be frequently used may be determined based on the viewing frequency for each content and the cumulative quality. For example, because frequently viewed content has similar quality for each type of content, a second reference model generated in correspondence to the frequently viewed content may be frequently used. Furthermore, because the frequently viewed content has similar quality for each resolution of content, a second reference model generated in correspondence to a resolution of the frequently viewed content may be frequently used. In an example, when a specific quality value has a high cumulative frequency among qualities of the frequently viewed content, a second reference model generated in correspondence to the quality value having a high cumulative frequency may be frequently used.

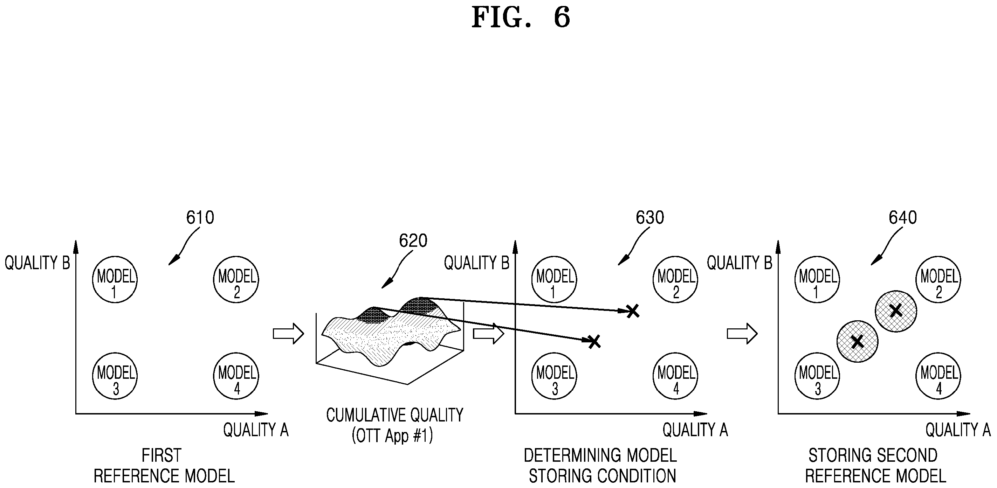

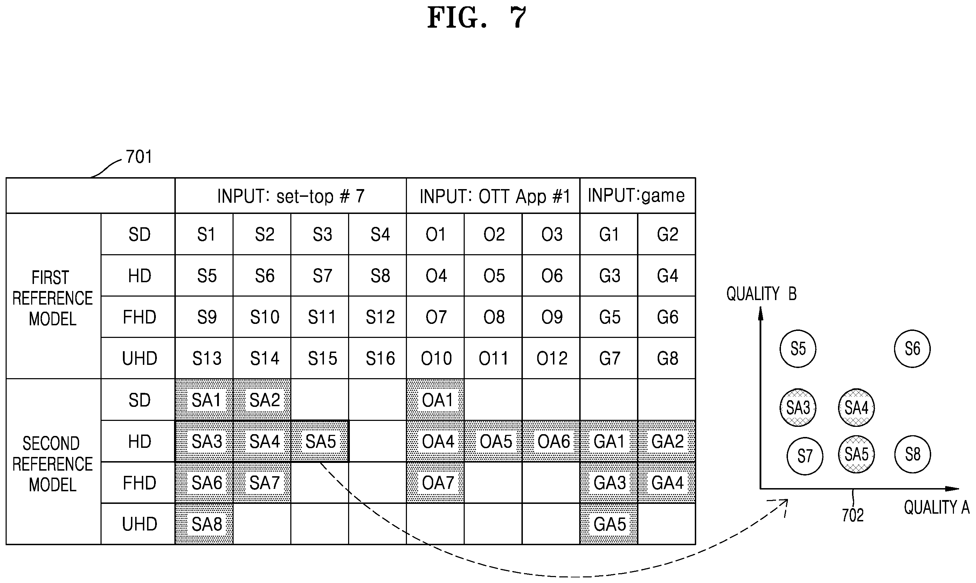

In an embodiment of the disclosure, the model storing condition may include at least one of information about content with a high viewing frequency, resolution information of the content, high frequency points of the cumulative quality, or the number of models to be stored. For example, the model storing condition may be determined for each content with a high viewing frequency and for each resolution of the content. The model storing condition may include quality value information corresponding to the high frequency points of the cumulative quality. The model storing condition may include information about the number of models to be stored, corresponding to the number of high frequency points of the cumulative quality. Examples of the model storing condition are described in detail with reference to graph 630 of FIG. 6 or FIG. 7.

In operation 330, according to an embodiment of the disclosure, based on obtaining a reference model corresponding to the model storing condition, the image processing device 100 may store the reference model in a memory.

In an embodiment of the disclosure, the image processing device 100 may store in the non-volatile memory a second reference model corresponding to the model storing condition among a plurality of second reference models generated from the first reference model. The image processing device 100 may store a second reference model to be frequently used in the non-volatile memory, separately from the first reference model.

In an embodiment of the disclosure, the image processing device 100 may generate a plurality of second reference models by applying training data corresponding to the quality of each of the input images included in the video content to the first reference model. The operation of generating the plurality of second reference models may be performed separately from the operation of determining a second reference model to be stored. The plurality of second reference models may be generated in real time based on real-time input images.

In an embodiment of the disclosure, when a second reference model is a model trained in correspondence to the quality of content with a high viewing frequency, the image processing device 100 may store the second reference model in the non-volatile memory. The image processing device 100 may additionally store a model trained with training data corresponding to the quality of content with a high viewing frequency. The additionally stored second reference model may have parameters for processing the quality of the content with a high viewing frequency.

Furthermore, in an embodiment of the disclosure, when the quality of a current input image corresponds to a high frequency point of the cumulative quality, the image processing device 100 may store the second reference model in the non-volatile memory. The image processing device 100 may additionally store a second reference model trained with training data corresponding to a quality value accumulated at a high frequency. The additionally stored second reference model may have parameters for processing the high frequency point of the cumulative quality.

In an embodiment of the disclosure, the image processing device 100 may store, for each content with a high viewing frequency, a second reference model in the non-volatile memory, which is trained in correspondence to a quality value accumulated at a high frequency in a cumulative quality of each content with a high viewing frequency.

In an embodiment of the disclosure, the image processing device 100 may store a second reference model for each type of classification information. For example, the classification information may include at least one of a type of content, a resolution of the content, or a combination of the type of the content and the resolution of the content. For example, the second reference model may be stored by type of content, by resolution of content, or by a combination of content type and content resolution. For example, the image processing device 100 may store a second reference model for first content with a high viewing frequency separately from a second reference model for second content with a high viewing frequency. An example of a second reference model stored for each type of classification information is described below with reference to FIG. 7.

In an embodiment of the disclosure, content with a high viewing frequency may correspond to a defined number of pieces of content with a high viewing frequency, top M% of content with a high viewing frequency (where M is a positive number), or content with a viewing frequency greater than or equal to a defined value. For example, the image processing device 100 may store cumulative qualities corresponding to three pieces of content with a high viewing frequency. For example, the image processing device 100 may store a second reference model corresponding to the top 30 % of content with a high viewing frequency.

In an embodiment of the disclosure, high frequency points of the cumulative quality may correspond to a defined number of points with a high cumulative frequency, a top N% of points with a high cumulative frequency (where N is a positive number), or points with a cumulative frequency greater than or equal to a defined value. For example, if the defined value specifies a signal to noise ratio (SNR), and a video with 100 frames has 10 frames with a highest SNR of 10 dB, than the high frequency points of the video include the 10 video frames with a SNR of 10 dB.

In operation 340, according to an embodiment of the disclosure, the image processing device 100 may generate a target model corresponding to a first image by training the stored reference model by using training data corresponding to a quality of the first image. The first image may be an input image to the image processing device 100. The first image may be an image input to the image processing device 100 after a second reference model is stored.

In an embodiment of the disclosure, the image processing device 100 may obtain quality information of the first image via a quality analyzer. The quality analyzer may analyze characteristics of the image such as luminance, noise, etc., to determine the quality information of the image. The image processing device 100 may obtain training data corresponding to the quality of the first image. The training data may include high-resolution images (ground truth images or labels) and low-resolution images. The image processing device 100 may obtain a reference model corresponding to the quality of the first image. The image processing device 100 may generate a target model corresponding to the quality of the first image by applying the training data to the reference model corresponding to the quality of the first image.

In an embodiment of the disclosure, the image processing device 100 may generate a degraded low-resolution image from the first image by applying degradation to the first image to the same degree as the degree of image quality degradation in the first image. The image processing device 100 may generate training data including the first image used as a ground truth image and a low-resolution image degraded from the first image.

In an embodiment of the disclosure, the image processing device 100 may obtain a model that outputs an image with a quality that is closer to the quality of the first image among a pre-stored first reference model and an additionally stored second reference model. Alternatively, in an embodiment of the disclosure, the image processing device 100 may obtain a target model by interpolating a plurality of reference models. For example, the image processing device 100 may interpolate the plurality of reference models by applying weights of each reference model to parameters of the plurality of reference models. A method, performed by the image processing device 100, of obtaining a reference model is not limited to the above-described examples.

In an embodiment of the disclosure, the image processing device 100 may perform transfer learning on the reference model corresponding to the quality of the first image by using the training data corresponding to the quality of the first image. The transfer learning may refer to a process of fine-tuning parameters of a pre-trained neural network model. The image processing device 100 may generate a target model corresponding to the quality of the first image. The target model may have parameters adjusted for image quality processing of the first image.

In an embodiment of the disclosure, the image processing device 100 may obtain, based on the target model, a quality-processed second image from the first image.

According to an embodiment of the disclosure, the image processing device 100 may quickly generate a target model corresponding to the quality of the input image by pre-storing a reference model corresponding to the quality of content frequently viewed by the user in the non-volatile memory. The image processing device 100 may quickly provide upscaled images for user's preferred content by speeding up the generation of a target model with parameters adapted to real-time quality changes according to the real-time quality changes. FIG. 4 is an example illustrating classification information according to an embodiment of the disclosure. In operation 310 of FIG. 3, the cumulative quality of the input images may be stored for each type of classification information.

In an embodiment of the disclosure, the quality of an input image may be accumulated for each type of classification information. The classification information may include first classification information 410 corresponding to a type of content and second classification information 420 corresponding to a resolution of the content. Each content included in the first classification information 410 may be classified into sub-classification information 415.

In an embodiment of the disclosure, the type of content may correspond to the first classification information 410 for classifying and accumulating input qualities of input images. For example, for input images, a cumulative quality may be stored for each content. For example, content may include OTT content, broadcast content, console games, cloud games, etc. For example, the quality of image frames included in OTT content, the quality of image frames included in broadcast content, qualities of image frames included in game console content, and the quality of image frames included in a cloud game may be accumulated separately.

In an embodiment of the disclosure, for OTT content, input quality may be stored for each OTT content provider. The type of OTT content provider may correspond to the sub-classification information 415 for classifying and accumulating input qualities of input images. For example, the quality of input images provided by a first OTT content provider (App #1) may be accumulated separately from the quality of input images provided by a second OTT content provider (App #2). However, the quality of OTT content is not limited thereto and may not be further classified by content provider.

In an embodiment of the disclosure, for broadcast content, input quality may be stored for each broadcast channel. The type of broadcast channel may correspond to the sub-classification information 415 for classifying and accumulating input quality of input images. For example, the quality of input images provided by channel #7 may be accumulated separately from the quality of input images provided by channel #231. For example, channel #7 may be received from a terrestrial broadcasting station server, and channel #231 may be received from a cable broadcasting station server. Terrestrial broadcasting station servers may mainly provide content in FHD resolution. Cable broadcasting station servers may mainly provide content in SD resolution. However, the quality of broadcast content is not limited thereto and may not be further classified by broadcast channel.

In an embodiment of the disclosure, for console games, input quality may be stored for each game content. Game content may refer to a type of game software. The type of game content may correspond to the sub-classification information 415 for classifying and accumulating input quality of input images. For example, the quality of input images provided by first game content (Game Content #1) may be accumulated separately from the quality of input image provided by second game content (Game Content #2). For example, the first game content (Game Content #1) may provide content in FHD resolution, and the second game content (Game Content #2) may provide content in UHD resolution.

In an embodiment of the disclosure, for cloud games, input quality may be stored for each cloud game provider. The type of cloud game provider may correspond to the sub-classification information 415 for classifying and accumulating input quality of input images. For example, the quality of input images provided by a first cloud game provider (Game App #1) may be accumulated separately from the quality of input images provided by other cloud game providers.

In an embodiment of the disclosure, the resolution of the content may correspond to the second classification information 420 for classifying and accumulating an input quality of input images. For example, for input images, an input quality may be stored for each resolution of the content. The resolution of the content may include SD, HD, FHD, and UHD.

In an embodiment of the disclosure, a type of subscription product may be one of the factors that determines the resolution of the content. For example, OTT content providers may provide content in SD, HD, FHD, or UHD resolution depending on a product to which the user has subscribed. For example, a regular plan may offer low-resolution content, and a premium plan may offer high-resolution content.

Furthermore, in an embodiment of the disclosure, a network transmission speed may be one of the factors that determines the resolution of the content. For example, OTT content providers may deliver content in SD, HD, FHD, or UHD resolution depending on a network transmission speed. For example, cloud gaming providers may deliver content in SD, HD, FHD, or UHD resolution depending on a network transmission speed. Network transmission speeds vary by region and may vary depending on a network bandwidth supported by a device, e.g., 5th generation (5G) or 3rd generation (3G). For example, when the network bandwidth is high, high-resolution content may be provided, and when the network bandwidth is limited, low-resolution content may be provided.

Furthermore, in an embodiment of the disclosure, a genre of broadcast content may be one of the factors that determines the resolution of the content. For example, a terrestrial broadcasting station server connected to a set-top box may provide content in UHD resolution for an awards show or soccer game, and in FHD resolution for a drama or newscast. The genre of broadcast content may be identified via a program schedule, etc., provided by a broadcasting station server.

Furthermore, in an embodiment of the disclosure, a resolution of the original content may be one of the factors that determines the resolution of the content. For example, content produced in the past may have a lower original resolution than content produced recently.

Moreover, in operation 330 of FIG. 3, the second reference model may also be stored for each type of classification information. For example, the second reference model may be stored for each type of content and each resolution of the content.

FIG. 5 is an example of a cumulative quality of input images, according to an embodiment of the disclosure. FIG. 5 illustrates the cumulative quality described in operation 310 of FIG. 3. Table 501 in FIG. 5 shows items used to store input quality. In table 501, column items represent types of content, and row items represent resolution types.

In an embodiment of the disclosure of the disclosure, a cumulative quality of input images corresponding to preferred content may be stored in the image processing device 100. In an example, a cumulative quality of input images that does not correspond to preferred content may not be stored in the image processing device 100. For example, in table 501 of FIG. 5, when the user frequently watches first OTT app (OTT App #1), channel #7, and first game content (game), the image processing device 100 may accumulate qualities of input images corresponding to the frequently watched content.

In an embodiment of the disclosure, a cumulative quality of input images corresponding to preferred content may be stored for each type of classification information. The image processing device 100 may accumulate, for content with a high viewing frequency, qualities of input images for the same content and/or the same resolution.

For example, a cumulative quality of input images may be stored by OTT content, broadcast content, and game content. When the input images correspond to OTT content, the cumulative quality of the input images may be stored for each OTT content provider. When the input images correspond to broadcast content, the cumulative quality of the input images may be stored for each broadcast channel. When the input images correspond to game content, the cumulative quality of the input images may be stored for each type of game content.

For example, a cumulative quality of input images may be stored separately for each resolution of the same content. For example, a cumulative quality of input images provided by OTT content may be stored for each of resolutions SD, HD, FHD, and UHD. For example, a cumulative quality of input images provided by broadcast content may be stored for each of resolutions SD, HD, FHD, and UHD. For example, a cumulative quality of input images provided by game content may be stored for each of resolutions SD, HD, FHD, and UHD.

Even for images corresponding to the same content and/or the same resolution, quality values may be distributed over different ranges. For example, quality values of images may be distributed over different ranges depending on degradations that occur during acquisition, transmission, and storage of the images. For example, even when input images correspond to the same content and the same resolution, the quality of the input images may vary depending on bit rate information, such as 40 Mbps, 30 Mbps, etc. and/or codec information, such as H.264, high efficiency video coding (HEVC), etc. For example, video content at the SDR resolution may contain a first image with an SNR of 5dB and a second image with an SNR of 8dB. In an embodiment of the disclosure, the quality of input images may be accumulated based on bit rate information and/or codec information that change in real time. The bit rate information or codec information may be included in metadata of the input images.

Graph 1 (502), graph 2 (503), and graph 3 (504) of FIG. 5 each represent a cumulative quality graph of images corresponding to the same content and the same resolution. Graph 1 (502) is illustrated as a cumulative quality graph obtained by accumulating quality values of images corresponding to the first OTT app (OTT App #1) having an HD resolution, graph 2 (503) is illustrated as a cumulative quality graph obtained by accumulating quality values of images corresponding to channel #7 having an FHD resolution, and graph 3 (504) is illustrated as a cumulative quality graph obtained by accumulating quality values of images corresponding to the first game content (game) having a UHD resolution. A cumulative quality graph such as graph 1 (502), graph 2 (503), or graph 3 (504) may be stored for each content item and each resolution item.

Graph 1 (502), graph 2 (503), and graph 3 (504) are each 3D cumulative quality graphs where an x-axis represents quality element A, a y-axis represents quality element B, and a z-axis represents a cumulative frequency. For example, a point with a large z-axis value represents a high frequency point of a cumulative quality, and a quality value corresponding to x-axis and y-axis coordinate values of the point with the large z-axis value represents a quality value of an input image corresponding to the high frequency point.

In an embodiment of the disclosure, the image processing device 100 may store a second reference model trained with training data corresponding to a quality value of an input image corresponding to a high frequency point of the cumulative quality. The image processing device 100 may store a second reference model trained with training data corresponding to quality values of input images accumulated for each content. The image processing device 100 may store a second reference model trained with training data corresponding to quality values of input images accumulated for each resolution of the content. The operation of storing a second reference model is described in detail with reference to FIG. 6.

FIG. 6 is an example illustrating an operation in which an image processing device stores a second reference model, according to an embodiment of the disclosure.

FIG. 6 shows graph 1 (610), graph 2 (620), graph 3 (630), and graph 4 (640).

Graph 1 (610) is a 2D quality graph showing first reference models pre-stored in the image processing device 100. The first reference models may be image quality processing models pre-trained based on training data with four different quality values.

Graph 2 (620) is a 3D cumulative quality graph showing a cumulative quality of input images accumulated over a defined period of time. The cumulative quality of the input images may correspond, for example, to first OTT app (OTT App #1) having an HD resolution. The cumulative quality of the input images may correspond to the user's preferred content.

Graph 3 (630) is a 2D quality graph showing a model storing condition which is a condition of second reference models to be additionally stored in the image processing device 100. The model storing condition may include information about quality values (e.g., x-axis values, y-axis values) corresponding to high frequency points (e.g., two points with highest z-axis values) of cumulative quality as illustrated in graph 2 (620). The model storing condition may include information about two quality values corresponding to the two high frequency points. In an embodiment of the disclosure, the model storing condition may include information about content with a high viewing frequency, resolution information of the content with a high viewing frequency, high frequency points of cumulative quality, and/or the number of models to be stored. For example, the image processing device 100 may determine to additionally store two reference models corresponding to the high frequency points of the cumulative quality of the first OTT app (OTT App #1) having the HD resolution.

Graph 4 (640) is a 2D quality graph showing the first reference models pre-stored in the image processing device 100 and the second reference models additionally stored. In graph 4 (640), the second reference models are represented by checkered circle symbols. The second reference models may be reference models corresponding to the model storing condition. When a second reference model corresponding to a model storing condition is generated among second reference models generated in real time, the image processing device 100 may store the second reference model. For example, the second reference models additionally stored in the image processing device 100 may be reference models having parameters corresponding to the high frequency points of the cumulative quality of the first OTT app (OTT App #1) with the HD resolution. For example, the quality may refer to SNR of an image (e.g., the higher the SNR, the lower the noise in an image), and the high frequency points in graph 2 620 may be 5dB and 8dB. Accordingly, the storing condition for the second reference models may specify that the trained first reference models that output images with an SNR exceeding 5dB are stored.

FIG. 7 is an example of a first reference model and a second reference model stored in a memory of an image processing device, according to an embodiment of the disclosure.

Table 701 in FIG. 7 shows model items used to store a first reference model and a second reference model. In table 701, column items represent types of content, and row items represent resolution types. A first reference model and a second reference model are stored separately for each item.

In an embodiment of the disclosure, reference models may include reference models for each type of content (e.g., OTT content, broadcast content, and game content) and/or reference models for each resolution (e.g., SD, HD, FHD, and UHD). In an embodiment of the disclosure, the reference models for each type of content may include an OTT content processing model, a broadcast content processing model, and a game content processing model. For example, the OTT content processing model may be an image quality processing model trained with training data corresponding to different qualities of OTT content. In an embodiment of the disclosure, the reference models for each resolution may include a SD resolution processing model, an HD resolution processing model, an FHD resolution processing model, and a UHD resolution processing model. For example, the HD resolution processing model may be an image quality processing model trained with training data corresponding to various qualities of images having an HD resolution. Each reference model may be distinguished by identification information (e.g., S1 to S16, O1 to O12, G1 to G8, etc.). The identification information of a reference model may include image quality processing content information, image quality processing resolution information, and parameter information corresponding to a specific quality value.

In an embodiment of the disclosure, the image processing device 100 generates second reference models from pre-stored first reference models, and a second reference model corresponding to a model storing condition among the second reference models may be stored for each item.

In an embodiment of the disclosure, the model storing condition may include at least one of information about content with a high viewing frequency, resolution information of the content with the high viewing frequency, high frequency points of cumulative quality, or the number of models to be stored.

For example, when the user frequently watches the channel #7, the first OTT app (OTT App #1), and the first game content, the image processing device 100 may determine a model storing condition to store second reference models corresponding to the frequently watched content. The model storing condition may include identification information of a model for processing the channel #7, the first OTT app (OTT App #1), and the first game content.

Furthermore, for example, when the user watches images of channel #7 having an HD resolution more frequently than images of channel #7 having an SD resolution, the image processing device 100 may determine a model storing condition to store a greater number of second reference models corresponding to the images of channel #7 having the HD resolution than second reference models corresponding to the images of channel #7 having the SD resolution.

In addition, for example, the image processing device 100 may determine a model storing condition to store second reference models trained with high frequency points of cumulative quality of the images. For example, the image processing device 100 may determine the model storing condition to store second reference models (e.g., SA3, SA4, and SA5) trained with high frequency points of cumulative quality for an item of the channel #7 having the HD resolution.

In an embodiment of the disclosure, the second reference models may be stored for the same content type. The second reference models may be stored for each type of content and/or each resolution of the content. For example, when the user frequently watches channel #7 and the first OTT app (OTT App #1), second reference models (e.g., SA1 to SA8) generated to process the quality of images of channel #7 may be stored as a separate item from second reference models (e.g., OA1 to OA7) generated to process the quality of images of the first OTT app.

In an embodiment of the disclosure, the second reference models may be stored for each type of content and each resolution of the content. The second reference models may be stored for each resolution even for the same content. For example, when the user frequently watches channel #7, the second reference model (e.g., SA8) generated to process the quality of images (e.g., soccer broadcast) of channel #7 having a UHD resolution may be stored as a separate item from the second reference models (e.g., SA6 and SA7) generated to process the quality of images (e.g., news broadcast) of channel #7 having an FHD resolution.

In an embodiment of the disclosure, the image processing device 100 may store a second reference model corresponding to cumulative quality for each type of content and/or each resolution of the content in a non-volatile memory. For example, in a graph 702, the image processing device 100 may store in the non-volatile memory the second reference models (e.g. SA3, SA4, and SA5), each corresponding to a cumulative quality, among a plurality of second reference models generated to process the images of channel #7 having the HD resolution. In this case, the cumulative quality of an image of channel #7 having the HD resolution may have three high frequency points.

In an embodiment of the disclosure, a second reference model may be a model updated from the first reference model. For example, the second reference models (e.g., SA3, SA4, and SA5) generated to process the images of channel #7 having the HD resolution may be models updated from the first reference models (e.g., S5, S6, S7, and S8) pre-stored to process the images of channel #7 having the HD resolution. For example, the second reference models may include an updated model from the first reference model (e.g., S7) that is closest to a high frequency point value of cumulative quality among the first reference models.

Moreover, in an embodiment of the disclosure, the reference models may further include reference models for each object type. For example, the reference models for each object type may include a face model, a letter model, and a general area model that does not include a face or letter. For example, a face model for performing image quality processing on the boundaries of the eyes, nose, and mouth, a letter model for performing image quality processing mainly on a letter area, and a general area model for performing image quality processing on the boundaries of a general area. In an example, the general area model may perform image quality processing for particular types of landscapes (e.g., ocean, forests, mountains, etc.). Furthermore, in an embodiment of the disclosure, the reference models may include a specific quality model for performing image quality processing based on a specific quality such as noise. In an embodiment of the disclosure, a second reference model may be stored for each object type. For example, when the user frequently watches video call content and document editing content, a second reference model generated for processing face objects corresponding to the video call content may be stored as a separate item from a second reference model generated for processing text objects corresponding to the document editing content.

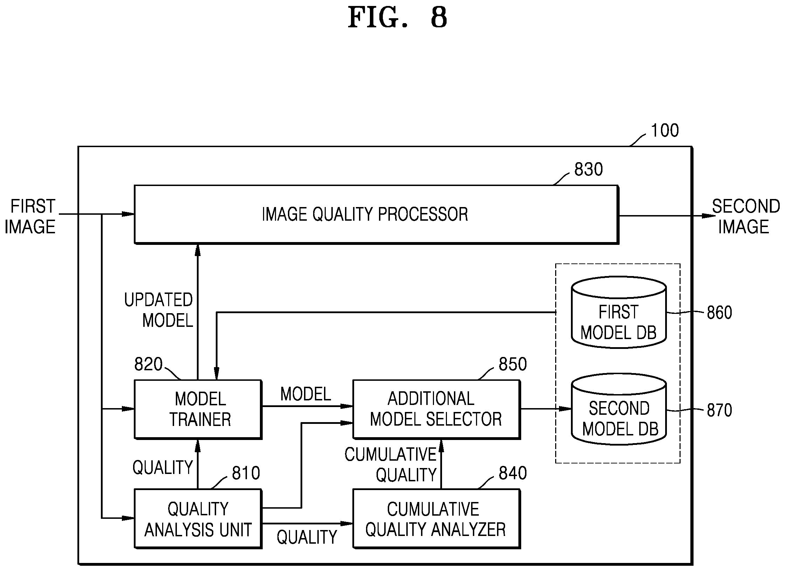

FIG. 8 illustrates a configuration of an image processing device according to an embodiment of the disclosure.

Referring to FIG. 8, an image processing device 100 according to an embodiment of the disclosure may include a quality analysis unit 810, a model trainer 820, an image quality processor 830, a cumulative quality analyzer 840, and an additional model selector 850. The quality analysis unit 810, the model trainer 820, the image quality processor 830, the cumulative quality analyzer 840, and additional model selector 850 may be implemented as at least one processor. The quality analysis unit 810, the model trainer 820, the image quality processor 830, the cumulative quality analyzer 840, and the additional model selector 850 may operate according to at least one instruction stored in a memory.

According to an embodiment of the disclosure, the quality analysis unit 810 may analyze or assess an image quality or quality of a first image. The first image may be an input image to the image processing device 100. The quality of an image may represent the degree of degradation in the image. The quality analysis unit 810 may assess or determine at least one of compression degradation of the first image, compression degree of the first image, degree of blur in the first image, degree of noise in the first image, or resolution of the first image.

According to an embodiment of the disclosure, the quality analysis unit 810 may analyze or assess the quality of the first image by using a neural network trained to assess the quality of the first image. For example, the neural network may be trained to assess the quality of an image or video by using an image quality assessment (IQA) technique, a video quality assessment (VQA) technique, etc. For example, the neural network may be a neural network trained to take the first image as input and output a kernel sigma value representing a blur quality of the first image and a QF representing a compression quality of the first image. The output quality of the first image may be represented by a quality plane graph as shown in FIG. 2A.

According to an embodiment of the disclosure, may provide the quality of the first image to the model trainer 820. The quality analysis unit 810 may provide the quality of the first image to the cumulative quality analyzer 840 and the additional model selector 850.

According to an embodiment of the disclosure, the model trainer 820 may perform an on-device learning operation. The on-device training operation may include an operation of training an image quality processing model for processing the quality of an input image to adapt to the input image.

According to an embodiment of the disclosure, the model trainer 820 may generate a meta model corresponding to the quality of the first image provided by the quality analysis unit 810. The model trainer 820 may generate an updated model by training (performing transfer learning on) the generated meta model by using training data corresponding to the first image. According to an embodiment of the disclosure may provide the updated model to the image quality processor 830. The model trainer 820 may provide the updated model to the additional model selector 850. The updated model provided to the image quality processor 830 may be referred to as a target model for the first image. The updated model provided to the additional model selector 850 may be referred to as a second reference model.

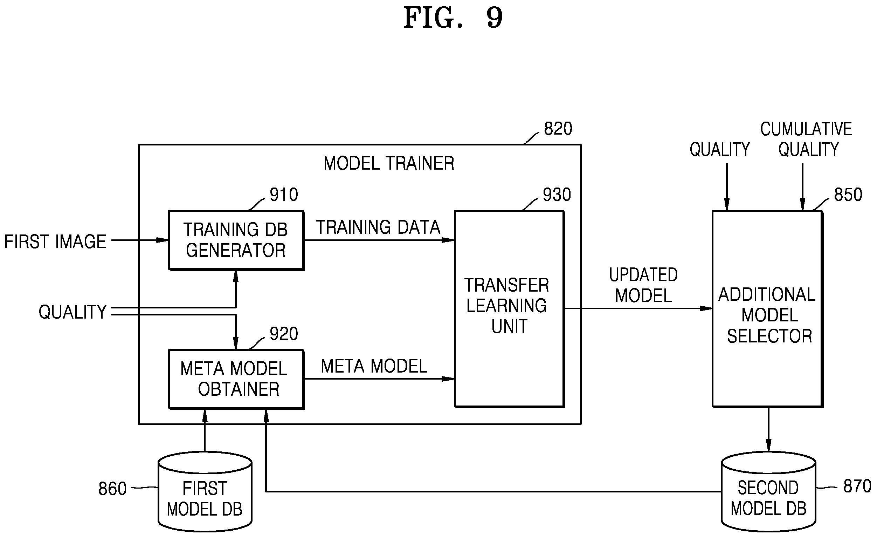

An operation in which the model trainer 820 generates a meta model and an updated model, according to an embodiment of the disclosure is described in detail below with reference to FIG. 9.

According to an embodiment of the disclosure, the image quality processor 830 may load the updated model from the model trainer 820 and perform image quality processing on the first image by using the updated model. The image quality processor 830 may obtain a second image by performing image quality processing on the first image. For example, the image quality processor 830 may perform image quality processing on the first image by using a neural network trained to process the quality of the first image. The neural network may be an inference network that implements a super resolution (SR) algorithm capable of converting a low- resolution (or LR) image into a high-resolution (or HR) image. The image quality processor 830 may perform image quality processing on the first image by using the updated model obtained via the model trainer 820. The image quality processor 830 may obtain the second image (HR image) by applying the first image to the updated model. As understood by one of ordinary skill in the art, the SR algorithm improves the image quality by enhancing image resolution so that more details are apparent. The SR algorithm may be applied to a specific region of an image, or to an entire portion of an image.

According to an embodiment of the disclosure, the cumulative quality analyzer 840 may store a cumulative quality of input images. The cumulative quality analyzer 840 may operate independently from the model trainer 820 and the image quality processor 830. The cumulative quality analyzer 840 may accumulate the quality of content viewed over a medium or long period of time.

According to an embodiment of the disclosure, the cumulative quality analyzer 840 may store a cumulative quality of input images corresponding to content with a high viewing frequency. The cumulative quality analyzer 840 may obtain information about content having a high viewing frequency and content having a low viewing frequency based on the user's viewing history accumulated over a defined period of time. The cumulative quality analyzer 840 may store a cumulative quality of input images corresponding to content with a high viewing frequency, and may not store a cumulative quality of input images corresponding to content with a low viewing frequency.

According to an embodiment of the disclosure, the cumulative quality analyzer 840 may store a cumulative quality of input images for each type of classification information. For example, classification information may include at least one of a type of content, a resolution of the content, or a combination of the type of the content and the resolution of the content. For example, the cumulative quality of the input images may be accumulated by type of content, by resolution of content, or by a combination of type of content and resolution of content.

According to an embodiment of the disclosure, the cumulative quality analyzer 840 may store a cumulative quality of input images corresponding to content with a high viewing frequency for each type of classification information. The cumulative quality of the input images corresponding to the preferred content is stored for each content, and may be stored separately for each resolution of the content. The cumulative quality stored for each type of classification information for content having a high viewing frequency has been described with reference to FIG. 6.

The cumulative quality analyzer 840 may provide the cumulative quality of the input images to the additional model selector 850.

According to an embodiment of the disclosure, the additional model selector 850 may determine a model storing condition based on the cumulative quality received from the cumulative quality analyzer 840. The model storing condition may refer to a condition of a second reference model to be stored in a non-volatile memory among second reference models updated from pre-stored first reference models. The additional model selector 850 may determine a model storing condition based on the cumulative quality of the input images accumulated for each content having a high viewing frequency and for each resolution of the content. The model storing condition may include at least one of information about content with a high viewing frequency, resolution information of the content, high frequency points of cumulative quality, or the number of models to be stored. The model storing condition may include quality value information corresponding to the high frequency points of the cumulative quality. The model storing condition may include information about the number of models to be stored, corresponding to the number of high frequency points of the cumulative quality.

According to an embodiment of the disclosure, the additional model selector 850 may store a second reference model corresponding to the model storing condition in a second model DB 870. When it is determined that the updated model (second reference model) from the model trainer 820 corresponds to the model storing condition (e.g., the updated model outputs an image with an image quality meeting the storing condition), the additional model selector 850 may store the second reference model in the second model DB 870. For example, when the quality of an input image received from the quality analysis unit 810 corresponds to a high frequency point of the cumulative quality, the additional model selector 850 may store a second reference model received from the model trainer 820. The additional model selector 850 may store, based on a cumulative quality corresponding to content having a high viewing frequency, a second reference model updated to process the content with the high viewing frequency.

According to an embodiment of the disclosure, the additional model selector 850 may store models updated with quality values corresponding to high frequency points of cumulative quality stored for each content that is frequently viewed and each resolution of the content. The additional model selector 850 may store second reference models generated for each content that is frequently viewed and each resolution of the content. Second reference models stored for each content that is frequently viewed and each resolution of the content have been described with reference to FIG. 7.

According to an embodiment of the disclosure, a first model DB 860 may be stored in the non-volatile memory of the image processing device 100 or in a DB of a server. First reference models pre-stored in the image processing device 100 may be stored in the first model DB 860.

According to an embodiment of the disclosure, the second model DB 870 may be stored in the non-volatile memory of the image processing device 100 or in a DB of a server. Second reference models corresponding to a model storing condition may be stored in the second model DB 870.

According to an embodiment of the disclosure, the model trainer 820 may generate a meta model, based on the first reference models stored in the first model DB 860 and the second reference models stored in the second model DB 870. The model trainer 820 may generate a target model by using the first reference models and the second reference models, thereby reducing the time taken to generate the target model.

The quality analysis unit 810, the model trainer 820, the image quality processor 830, the cumulative quality analyzer 840, and the additional model selector 850 may be implemented as software modules by dividing operations performed by a processor by function or purpose, or may be configured as hardware. FIG. 9 is a diagram specifically illustrating a model trainer of an image processing device, according to an embodiment of the disclosure.

Referring to FIG. 9, according to an embodiment of the disclosure, the model trainer 820 may include a training DB generator 910, a meta model obtainer 920, and a transfer learning unit 930.

According to an embodiment of the disclosure, the training DB generator 910 may generate training data corresponding to the first image based on the first image and the quality of the first image received via the quality analysis unit 810. The training data may include high-resolution images (ground truth images or labels) and low-resolution images. The training DB generator 910 may generate a degraded low-resolution image from the first image by applying degradation to the first image to the same degree as the degree of image quality degradation in the first image. The training DB generator 910 may generate training data including the first image used as a ground truth image and a low-resolution image degraded from the first image.

According to an embodiment of the disclosure, the meta model obtainer 920 may use at least one reference model from the first model DB 860 or the second model DB 870 as a meta model. A second reference model stored in the second model DB 870 may be a model updated from a first reference model.

According to an embodiment of the disclosure, based on the quality of the first image received via the quality analysis unit 810, the meta model obtainer 920 may identify a model that outputs an image having a quality of the first image among a first reference model and a second reference model. The meta model obtainer 920 may use a reference model which is identified the closest model to the quality of the first image as a meta model.

According to an embodiment of the disclosure, the meta model obtainer 920 may obtain a meta model by interpolating a plurality of reference models including a first reference model and a second reference model. For example, the meta model obtainer 920 may interpolate the plurality of reference models by applying a weight of each of the plurality of reference models to parameters of each reference model. For example, the meta model obtainer 920 may generate a meta model by respectively applying weights to the plurality of reference models and summing the weighted reference models (a weighted sum). A method, performed by the meta model obtainer 920, of obtaining a meta model is not limited to the above-described example.

The meta model obtainer 920 may transmit the generated meta model to the transfer learning unit 930.

According to an embodiment of the disclosure, the transfer learning unit 930 may train the meta model by using the training data received from the training DB generator 910. For example, the transfer learning unit 225 may train the meta model by using a gradient descent algorithm. Gradient descent is a first-order optimization algorithm for finding an approximate value and is a method for finding a value of x when a value of a function is a minimum value by calculating a slope (gradient) of the function and continuously moving the slope in a direction that reduces an absolute value of the gradient.

For example, the transfer learning unit 930 may compare an image that is output from the meta model by inputting a low-resolution image included in the training data to the meta model with the first image included in the training data, calculate a difference between the two images as a slope of a function, and obtain parameters of a model when an absolute value of the slope reaches a minimum. The slope of the function may correspond to a partial derivative of the parameters of the model with respect to the difference between the two images. That is, the transfer learning unit 225 may train the meta model by continuously updating parameters of the meta model to minimize a quantitative difference between an image output from the meta model and a high-quality image included in a training data set.

According to an embodiment of the disclosure, the transfer learning unit 930 may transmit the updated model to the additional model selector 850. When the quality of an input image received via the quality analysis unit 810 corresponds to a high frequency point of the cumulative quality received via the cumulative quality analyzer 840, the additional model selector 850 may determine that training data for the second reference model (updated model) received from the transfer learning unit 930 corresponds to a high frequency point of the cumulative quality. When determining that the training data for the second reference model corresponds to the high frequency point of the cumulative quality, the additional model selector 850 may store the second reference model in the second model DB 870. The second reference model stored in the second model DB 870 may be used as a meta model for image quality processing of the first image.

According to an embodiment of the disclosure, the meta model obtainer 920 may obtain a meta model for image quality processing of the first image using the first reference model and the second reference model, thereby speeding up the generation of the meta model.

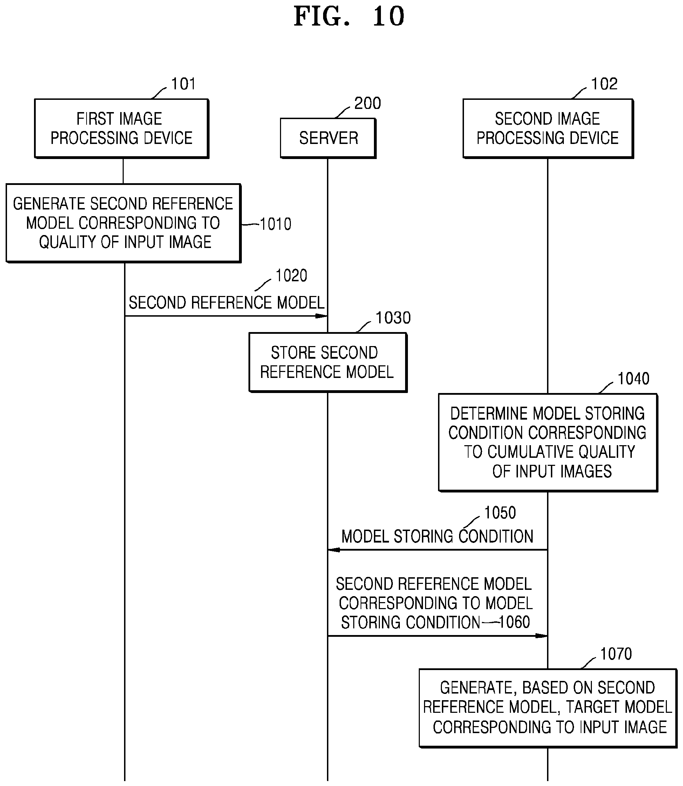

According to an embodiment of the disclosure, the image processing device 100 may quickly generate a target model corresponding to the quality of the input image by pre-storing a reference model corresponding to the quality of content frequently viewed by the user in the non-volatile memory. The image processing device 100 may quickly provide upscaled images for user's preferred content by speeding up the generation of a target model with parameters adapted to real-time quality changes according to the real-time quality changes. FIG. 10 is a flowchart of an operating method of image processing devices and a server, according to an embodiment of the disclosure.

Referring to FIG. 10, the image processing devices may include a first image processing device 101 and a second image processing device 102. Each of the first image processing device 101 and the second image processing device 102 may correspond to the image processing device 100 according to an embodiment of the disclosure.

In operation 1010, the first image processing device 101 may generate a second reference model in response to a quality of an input image. For example, the first image processing device 101 may generate an updated model by training a first reference model by using training data corresponding to the quality of the input image.

In operation 1020, the first image processing device 101 may transmit the second reference model to a server 200 via a communication interface. The first image processing device 101 may transmit, to the server 200, a second reference model corresponding to a model storing condition based on a cumulative quality of input images.

In operation 1030, the server 200 may store in a memory the second reference model received from the first image processing device 101 via the communication interface. The second reference model may be an image quality processing model corresponding to content frequently viewed by a user of the first image processing device 101 and the cumulative quality of the content.

In operation 1040, the second image processing device 102 may determine a model storing condition corresponding to a cumulative quality of input images. The second image processing device 102 may determine, based on the cumulative quality of the input images, a condition of a model for processing frequently viewed content. The model storing condition may include at least one of information about content with a high frequency of viewing by a user of the second image processing device 102, resolution information of the content, high frequency points of the cumulative quality, or the number of models to be stored.

In operation 1050, the second image processing device 102 may transmit the model storing condition to the server 200 via a communication interface.

In operation 1060, the server 200 may receive the model storing condition from the second image processing device 102 via the communication interface. The server 200 may transmit, to the second image processing device 102, a second reference model corresponding to the model storing condition received from the second image processing device 102. The server 200 may provide the second reference model received from the first image processing device 101 to the second image processing device 102.

In operation 1070, the second image processing device 102 may generate a target model corresponding to the input image based on the second reference model received from the server 200.

The quality of the input image is similar for each content, and is likely to be similar for each region. For example, each cable broadcasting station in a different region may transmit an image having different bit rate information. For example, an image transmitted by an over-the-air (OTA) broadcasting station to an image processing device has a high bit rate while an image transmitted by a cable broadcasting station to an image processing device has a low bit rate. In addition, for example, a network environment in the same region may be similar, and when the network environment is similar, bit rate information of an image transmitted by a content provider to the image processing device may be similar.

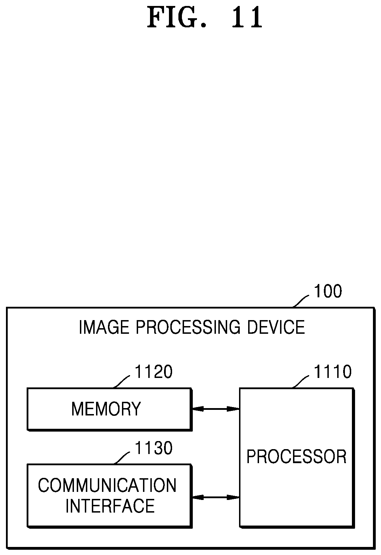

In an embodiment of the disclosure, when the first image processing device 101 and the second image processing device 102 receive content from the same region, there is a high probability that a reference model required by the first image processing device 101 is similar to a reference model required by the second image processing device 102. Therefore, when second reference models for each content are stored in the server 200, the second image processing device 102 may use second reference models generated by other users (e.g., the user of the first image processing device 101). The second image processing device 102 may use the second reference models generated by the other users by downloading or periodically updating the second reference models previously stored in the server 200. Accordingly, the second image processing device 102 may more quickly train a target model corresponding to the input image. FIG. 11 is a block diagram of an image processing device according to an embodiment of the disclosure.

Referring to FIG. 11, an image processing device 100 according to an embodiment of the disclosure may include a processor 1110, a memory 1120, and a communication interface 1130.

According to an embodiment of the disclosure, the communication interface 1130 may transmit or receive data or signals to or from an external device or the server (200 of FIG 10). For example, the communication interface 1130 may include a Wi-Fi module, a Bluetooth module, an infrared (IR) communication module, a wireless communication module, a LAN module, an Ethernet module, a wired communication module, etc. In this case, each communication module may be implemented in the form of at least one hardware chip.

The Wi-Fi module and the Bluetooth module perform communications according to a Wi-Fi method and a Bluetooth method, respectively. When the Wi-Fi module or the Bluetooth module is used, various types of connection information such as a service set identifier (SSID) and a session key may be first transmitted and received, a communication connection may be established using the connection information, and then various types of information may be transmitted and received. The wireless communication module may include at least one communication chip for performing communication according to various wireless communication standards such as ZigBee, 3G, 3rd Generation Partnership Project (3GPP), long-term evolution (LTE), LTE Advanced (LTE-A), 4th generation (4G), 5G, etc.

According to an embodiment of the disclosure, the communication interface 1130 may transmit a model storing condition to the server 200. According to an embodiment of the disclosure, the communication interface 1130 may receive a reference model corresponding to the model storing condition from the server 200.

The processor 1110 controls all the operations of the image processing device 100 and a flow of signals between the internal components of the image processing device 100 and performs a function of processing data.

The processor 1110 may include a single core, a dual core, a triple core, a quad core, or a number of cores equal to multiples of thereof. Furthermore, the processor 1110 may include a plurality of processors. For example, the processor 1110 may be implemented as a main processor (not shown) and a sub processor (not shown).

In addition, the processor 1110 may include at least one of a CPU, a graphics processing unit (GPU), or a video processing unit (VPU). Alternatively, according to an embodiment of the disclosure, the processor 1110 may be implemented as a system on chip (SoC) that integrates at least one of a CPU, a GPU, or a VPU. Alternatively, the processor 1110 may further include a neural processing unit (NPU).

According to an embodiment of the disclosure, the memory 1120 may store various pieces of data, programs, or applications for driving and controlling the image processing device 100.

Also, a program stored in the memory 1120 may include one or more instructions. A program (one or more instructions) or an application stored in the memory 1120 may be executed by the processor 1110.

According to an embodiment of the disclosure, the processor 1110 may include the quality analysis unit 810, the model trainer 820, and the image quality processor 830 of FIG. 8, and perform the operations of the quality analysis unit 810, the model trainer 820, and the image quality processor 830.

According to an embodiment of the disclosure, the processor 1110 executes one or more instructions stored in the memory 1120 to store a cumulative quality of input images based on a viewing frequency for each content. According to an embodiment of the disclosure, the processor 1110 determines a model storing condition based on the viewing frequency for each content and the cumulative quality. According to an embodiment of the disclosure, based on obtaining a reference model corresponding to the model storing condition, the processor 1110 stores the reference model in the memory 1120. According to an embodiment of the disclosure, the processor 1110 generates a target model corresponding to a first image by training the stored reference model by using training data corresponding to a quality of the first image.

According to an embodiment of the disclosure, the image processing device 100 may quickly generate a target model corresponding to the quality of the input image by pre-storing a reference model corresponding to the quality of content frequently viewed by the user in the non-volatile memory. The image processing device 100 may quickly provide upscaled images for user's preferred content by speeding up the generation of a target model with parameters adapted to real-time quality changes in response to the real-time quality changes.

According to an embodiment of the disclosure, the model storing condition may include at least one of information about content with a high viewing frequency, resolution information of the content, high frequency points of the cumulative quality, or the number of models to be stored.

According to an embodiment of the disclosure, the processor 1110 may execute one or more instructions stored in the memory 1120 to store in a non-volatile memory a second reference model trained in correspondence to a quality of an input image based on a pre-stored first reference model, according to the second reference model corresponding to the model storing condition.

According to an embodiment of the disclosure, the processor 1110 may execute one or more instructions stored in the memory 1120 to store the second reference model in the non-volatile memory based on the quality of the input image corresponding to a high frequency point of the cumulative quality.

According to an embodiment of the disclosure, the processor 1110 may execute one or more instructions stored in the memory 1120 to store the second reference model in the non-volatile memory, based on the second reference model corresponding to a model trained in correspondence to a quality of content with a high viewing frequency.

According to an embodiment of the disclosure, the processor 1110 may execute one or more instructions stored in the memory 1120 to store a reference model for each type of classification information. According to an embodiment of the disclosure, the classification information may include at least one of a type of content, a type of OTT content, a type of broadcast channel, a type of game content, a resolution of the content, or a combination of the type of content and the resolution of the content.

According to an embodiment of the disclosure, the processor 1110 may store the cumulative quality of the input images for each type of classification information. According to an embodiment of the disclosure, the classification information may include at least one of a type of content, a type of OTT content, a type of broadcast channel, a type of game content, a resolution of the content, or a combination of the type of content and the resolution of the content.

According to an embodiment of the disclosure, the processor 1110 may execute one or more instructions stored in the memory 1120 to store a cumulative quality of input images corresponding to content with a high viewing frequency.

According to an embodiment of the disclosure, the processor 1110 may execute one or more instructions stored in the memory 1120 to generate a target model by training, in correspondence to the quality of the first image, a model that is close to the quality of the first image among the pre-stored first reference model and the second reference model trained based on the first reference model.

According to an embodiment of the disclosure, the processor 1110 may execute one or more instructions stored in the memory 1120 to obtain, based on the target model, a quality-processed second image from the first image.

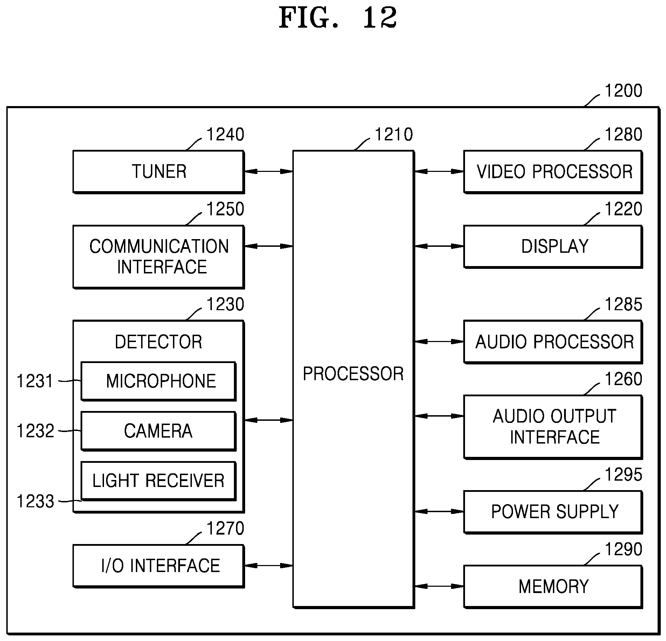

According to an embodiment of the disclosure, the processor 1110 may execute one or more instructions stored in the memory 1120 to control the communication interface 1130 to transmit the model storing condition to the server 200. According to an embodiment of the disclosure, based on receiving a reference model corresponding to the model storing condition from the server 200, the processor 1110 may store the reference model in the memory 1120. FIG. 12 is a detailed block diagram of an image processing device according to an embodiment of the disclosure.

An image processing device 1200 of FIG. 12 may correspond to the image processing device 100 of FIG. 11.

Referring to FIG. 12, according to an embodiment of the disclosure, the image processing device 1200 may include a tuner 1240, a processor 1210, a display 1220, a communication interface 1250, a detector 1230, an I/O interface 1270, a video processor 1280, an audio processor 1285, an audio output interface 1260, a memory 1290, and a power supply 1295.

The communication interface 1250 of FIG. 12 may correspond to the communication interface 1130 of FIG. 11, the processor 1210 of FIG. 12 may correspond to the processor 1110 of FIG. 11, and the memory 1290 of FIG. 12 may correspond to the memory 1120 of FIG. 11. Thus, descriptions already provided above with respect to FIG. 11 are omitted.

According to an embodiment of the disclosure, the display 1220 generates a driving signal by converting an image signal, a data signal, an on-screen display (OSD) signal, a control signal, etc. processed by the processor 1210. The display 1220 may be implemented as a plasma display panel (PDP), a liquid crystal display (LCD), an organic light-emitting diode (OLED) display, a flexible display, or the like, and may also be implemented as a 3D display. Furthermore, the display 1220 may be formed as a touch screen to serve as an input device as well as an output device.

According to an embodiment of the disclosure, by performing amplification, mixing, resonance, etc. of a broadcast signal received by wire or wirelessly, the tuner 1240 may tune and then select only a frequency of a channel that the image processing device 1200 desires to receive from among many radio wave components. The broadcast signal includes audio, video, and additional information (e.g., an electronic program guide (EPG)).

The tuner 1240 may receive broadcast signals from various sources such as terrestrial broadcasting, cable broadcasting, satellite broadcasting, Internet broadcasting, etc. The tuner 1240 may receive a broadcast signal from a source such as analog broadcasting, digital broadcasting, or the like.

According to an embodiment of the disclosure, the communication interface 1250 may receive a control signal, a control command, or the like from an external control device. For example, the communication interface 1250 may include an IR module capable of transmitting and receiving signals to and from the external control device according to IR communication standards. In detail, the communication interface 1250 may receive, from the control device, a control signal or a control command corresponding to a user input (e.g., a key or button input on the control device, etc.).

According to an embodiment of the disclosure, the detector 1230 detects a user's voice, images, or interactions and may include a microphone 1231, a camera 1232, and a light receiver 1233.

The microphone 1231 may receive a voice uttered by the user. The microphone 1231 may convert the received voice into an electrical signal and output the electrical signal to the processor 1210. The user's voice may include, for example, a voice corresponding to a menu or function of the image processing device 1200. For example, the microphone 1231 may receive a user's voice corresponding to a command to rotate a display, convert the received user's voice into an electrical signal, and output the electrical signal to the processor 1210.

The camera 1232 may receive an image (e.g., consecutive frames) corresponding to a user's motion including his or her gesture performed within a recognition range of the camera 1232. The processor 1210 may use a result of recognizing the motion in the received image to select a menu displayed on the image processing device 1200 or perform control corresponding to the motion recognition result. For example, the processor 1210 may receive an image from the camera 1232, recognize a user's motion corresponding to the rotation of the display from the received image, and rotate the display in response.

The light receiver 1233 receives an optical signal (including a control signal) from an external control device via a light window (not shown) or the like on a bezel of the display 1220. The light receiver 1233 may receive, from the control device, an optical signal corresponding to a user input (e.g., touching, pressing, touch gesture, voice, or motion). A control signal may be extracted from the received optical signal according to control by the processor 1210.

According to an embodiment of the disclosure, the I/O interface 1270 may receive a video (e.g., a moving image, etc.), audio (e.g., voice, music, etc.), additional information (e.g., an EPG, etc.), etc. from outside of the image processing device 1200. The I/O interface 1270 may include one of an HDMI, a mobile high-definition link (MHL), a USB, a Thunderbolt, a video graphics array (VGA) port, an RGB port, a D-subminiature (D-sub), a digital visual interface (DVI), a component jack, and a PC port.

The processor 1210 controls all the operations of the image processing device 1200 and a flow of signals between the internal components of the image processing device 1200 and performs a function of processing data. When there is an input by the user or a preset and stored condition is satisfied, the processor 1210 may execute an operation system (OS) and various applications stored in the memory 1290.

The processor 1210 may include RAM that stores signals or data input from outside of the image processing device 1200 or is used as a storage area corresponding to various tasks performed in the image processing device 1200, read-only memory (ROM) that stores a control program for controlling the image processing device 1200, and a processor.

The video processor 1280 processes video data received by the image processing device 1200. The video processor 1280 may perform various types of image processing, such as decoding, scaling, noise removal, frame rate conversion, resolution conversion, etc. on the video data.

The audio processor 1285 processes audio data. The audio processor 1285 may perform various types of processing, such as decoding, amplification, noise removal, etc., on the audio data. Moreover, the audio processor 1285 may include a plurality of audio processing modules to process audio corresponding to a plurality of pieces of content.

The audio output interface 1260 outputs audio contained in a broadcast signal received via the tuner 1240 according to control by the processor 1210. The audio output interface 1260 may output audio (e.g., a voice and a sound) input via the communication interface 1250 or the I/O interface 1270. Furthermore, the audio output interface 1260 may output audio stored in the memory 1290 according to control by the processor 1210. The audio output interface 1260 may include at least one of a speaker, a headphone output terminal, or a Sony/Phillips Digital Interface (S/PDIF) output terminal.

The power supply 1295 supplies, according to control by the processor 1210, power input by an external power source to the internal components of the image processing device 1200. The power supply 1295 may also supply, according to control by the processor 1210, power output from one or more batteries (not shown) located within the image processing device 1200 to the internal components.

The memory 1290 may store various pieces of data, programs, or applications for driving and controlling the image processing device 1200 according to control by the processor 1210. Although not shown in FIG. 12, the memory 1290 may include a broadcasting receiving module, a channel control module, a volume control module, a communication control module, a voice recognition module, a motion recognition module, a light receiving module, a display control module, an audio control module, an external input control module, a power control module, a power control module of an external device connected wirelessly (e.g., via Bluetooth), a voice DB, or a motion DB. The modules and DBs of the memory 1290 not shown in FIG. 12 may be implemented in the form of software in order to perform a broadcast reception control function, a channel control function, a volume control function, a communication control function, a voice recognition function, a motion recognition function, a light receiving control function, a display control function, an audio control function, an external input control function, a power control function, or a power control function of the external device connected wirelessly (e.g. via Bluetooth). The processor 1210 may perform the respective functions by using the software stored in the memory 1290.

Moreover, the block diagrams of the image processing devices 100 and 1200 respectively illustrated in FIGS. 11 and 12 are block diagrams for an embodiment of the disclosure. The components in the block diagrams may be integrated, added, or omitted according to specifications of the image processing devices 100 and 1200 that are actually implemented. In an example, two or more components may be combined into a single component, or a single component may be subdivided into two or more components when necessary. Furthermore, functions performed in each block are intended to describe an embodiment of the disclosure, and the specific operations or devices related to the functions are not intended to limit the scope of the disclosure.

A machine-readable storage medium may be provided in the form of a non-transitory storage medium. In this regard, the term 'non-transitory storage medium' only means that the storage medium does not include a signal (e.g., an electromagnetic wave) and is a tangible device, and the term does not differentiate between where data is semi-permanently stored in the storage medium and where the data is temporarily stored in the storage medium. For example, the 'non-transitory storage medium' may include a buffer for temporarily storing data.

According to an embodiment of the disclosure, methods according to an embodiment of the disclosure may be included in a computer program product when provided. The computer program product may be traded, as a product, between a seller and a buyer. The computer program product may be distributed in the form of a machine-readable storage medium (e.g., compact disc (CD)-ROM) or distributed (e.g., downloaded or uploaded) on-line via an application store or directly between two user devices (e.g., smartphones). For online distribution, at least a part of the computer program product (e.g., a downloadable app) may be at least transiently stored or temporally generated in a machine-readable storage medium such as a memory of a server of a manufacturer, a server of an application store, or a relay server.

**Claims**

1. An image processing device (100) comprising:

   memory (1120) storing one or more instructions; and
   one or more processors (1110) including processing circuitry, operatively coupled to the memory (1120),
   wherein the one or more instructions, when executed by the one or more processors (1110) individually or collectively, cause the image processing device (100) to:

      store a cumulative quality of content comprising a plurality of input images based on a viewing frequency of the content,
      determine a model storing condition based on the viewing frequency and the cumulative quality,
      obtain a reference model corresponding to the model storing condition,
      store the reference model in the memory (1120) , and
      generate a target model corresponding to a first image by training the reference model stored in the memory (1120) by using training data corresponding to a quality of the first image.

2. The image processing device (100) of claim 1, wherein the model storing condition comprises at least one of information about the content with a high viewing frequency, resolution information of the content, a high frequency point of the cumulative quality, or a number of models to be stored,

      wherein the content with the high viewing frequency represents content that is viewed at least a etermined number of times within a determined interval, and
      wherein the high frequency point of the cumulative quality represents a largest quality value included in the cumulative quality.

3. The image processing device (100) of claim 1 or 2, wherein the memory (1120) is a non-volatile memory, and
wherein the one or more instructions, when executed by the one or more processors (1110) individually or collectively, further cause the image processing device (100) to :

generate a second reference model trained from a pre-stored first reference model in response to a quality of the plurality of input images, and store, in the memory (1120) , the second reference model, based on the second reference model corresponding to the model storage condition.

4. The image processing device (100) of claim 3, wherein the one or more instructions, when executed by the one or more processors (1110) individually or collectively, further cause the image processing device (100) to store the second reference model in the memory (1120) based on the high frequency point of the cumulative quality.

5. The image processing device (100) of claim 3 or 4, wherein the one or more instructions, when executed by the one or more processors (1110) individually or collectively, further cause the image processing device (100) to store the second reference model in the memory (1120) for the content having the high viewing frequency.

6. The image processing device (100) of claim 1, wherein
the one or more instructions, when executed by the one or more processors (1110) individually or collectively, further cause the image processing device (100) to:

store the reference model for each type of classification information, and
the classification information comprises at least one of a type of content, a type of over-the-top (OTT) content, a type of broadcast channel, a type of game content, a resolution of the content, or a combination of the type of content and the resolution of the content.

7. The image processing device (100) of any one of claims 1 to 6, wherein

the one or more instructions, when executed by the one or more processors (1110) individually or collectively, further cause the image processing device (100) to:

store the cumulative quality of the content for each type of classification information, and
wherein the classification information comprises at least one of a type of content, a type of OTT content, a type of broadcast channel, a type of game content, a resolution of the content, or a combination of the type of content and the resolution of the content.

8. The image processing device (100) of any one of claims 1 to 7, wherein the one or more instructions, when executed by the one or more processors (1110) individually or collectively, further cause the image processing device (100) to store the cumulative quality of the plurality of input images corresponding to content with a high viewing frequency, and
wherein the content with the high viewing frequency represents content that is viewed at least a determined number of times within a determined interval.

9. The image processing device (100) of any one of claims 1 to 8, wherein the one or more instructions, when executed by the one or more processors (1110) individually or collectively, further cause the image processing device (100) to:

identify a model that outputs an image having a quality that is closest to the quality of the first image among the pre-stored first reference model and the second reference model trained based on the first model, and
generate the target model by training the identified model based on the quality of the first image.

10. The image processing device (100) of any one of claims 1 to 9, wherein the one or more instructions, when executed by the one or more processors (1110) individually or collectively, further cause the image processing device (100) to obtain, based on the target model, a second image that is quality-processed from the first image.

11. The image processing device (100) of any one of claims 1 to 10 individually or collectively, further comprising:

a communication interface,
wherein the one or more instructions, when executed by the one or more processors, further cause the image processing device (100) to:

control the communication interface to transmit the model storing condition to a server, and
based on receiving a reference model corresponding to the model storing condition from the server, store the reference model in the memory (1120) .

12. An operating method of an image processing device, the operating method comprising:

storing a cumulative quality of content comprising a plurality of input images based on a viewing frequency for the content;
determining a model storing condition, based on the viewing frequency and the cumulative quality;
obtaining a reference model corresponding to the model storing condition;
storing the reference model in the memory (1120) ; and
generating a target model corresponding to a first image by training the stored reference model by using training data corresponding to a quality of the first image.

13. The operating method of claim 12, wherein the model storing condition comprises at least one of information about the content with a high viewing frequency, resolution information of the content, a high frequency point of the cumulative quality, or a number of models to be stored,

wherein the content with the high viewing frequency represents content that is viewed at least a determined number of times within a determined interval, and
wherein the high frequency point of the cumulative quality represents a largest quality value included in the cumulative quality.

14. The operating method of claim 12 or 13, wherein the memory (1120) is a non-volatile memory, and wherein the storing of the reference model in the further comprises:

generating a second reference model trained from a pre-stored first reference model in response to a quality of the plurality of input images, and
storing, in the memory (1120) , the second reference model, based on the second reference model corresponding to the model storage condition.

15. The operating method of any one of claims 12 to 14, wherein the generating of the target model further comprises:

identifying a model that outputs an image having a quality that is closest to the quality of the first image among the pre-stored first reference model and the second reference model trained based on the first model; and
generating the target model by training the identified model based on the quality of the first

image.

# FIG. 1

FIRST IMAGE 110

100

SECOND IMAGE 120

MODEL TRAINING

# FIG. 2A

# FIG. 2B

Quality Metric / Frame # — Blur — Compression

# FIG. 3

```
                    ┌─────────┐
                    │  START  │
                    └────┬────┘
                         │
         ┌───────────────▼─────────────────┐
         │  STORE CUMULATIVE QUALITY OF INPUT IMAGES    │── 310
         │  BASED ON VIEWING FREQUENCY FOR EACH CONTENT │
         └───────────────┬─────────────────┘
                         │
         ┌───────────────▼─────────────────┐
         │  DETERMINE MODEL STORING CONDITION, BASED ON VIEWING │── 320
         │  FREQUENCY FOR EACH CONTENT AND CUMULATIVE QUALITY   │
         └───────────────┬─────────────────┘
                         │
         ┌───────────────▼─────────────────┐
         │  BASED ON OBTAINING REFERENCE MODEL CORRESPONDING TO │── 330
         │  MODEL STORING CONDITION, STORE REFERENCE MODEL IN MEMORY │
         └───────────────┬─────────────────┘
                         │
         ┌───────────────▼─────────────────┐
         │  GENERATE TARGET MODEL CORRESPONDING TO FIRST │── 340
         │  IMAGE BY TRAINING STORED REFERENCE MODEL BY USING │
         │  TRAINING DATA CORRESPONDING TO QUALITY OF FIRST IMAGE │
         └───────────────┬─────────────────┘
                         │
                    ┌────▼────┐
                    │   END   │
                    └─────────┘
```

# FIG. 4

FIRST CLASSIFICATION INFORMATION 410

| MAIN CLASSIFICATION INFORMATION | SUB-CLASSIFICATION INFORMATION 415 |
|---|---|

X

SECOND CLASSIFICATION INFORMATION 420

OTT CONTENT — App #1 / App #2

BROADCAST CONTENT — #7 / #231

GAME CONSOLE — Game Content #1 / Game Content #2

CLOUD GAME — Game App #1

SD

HD

FHD

UHD

# FIG. 5

| RESOLUTION \ CONTENT | INPUT: OTT App #1 | INPUT: set-top #7 | INPUT: game |
|---|---|---|---|
| SD | ... | | |
| HD | | | |
| FHD | | | |
| UHD | | | |

EP 4 779 555 A1

# FIG. 6

FIRST
REFERENCE MODEL

CUMULATIVE QUALITY
(OTT App #1)

DETERMINING MODEL
STORING CONDITION

STORING SECOND
REFERENCE MODEL

# FIG. 7

| | | INPUT: set-top # 7 | | | | INPUT: OTT App #1 | | | INPUT:game | |
|---|---|---|---|---|---|---|---|---|---|---|
| FIRST REFERENCE MODEL | SD | S1 | S2 | S3 | S4 | O1 | O2 | O3 | G1 | G2 |
| | HD | S5 | S6 | S7 | S8 | O4 | O5 | O6 | G3 | G4 |
| | FHD | S9 | S10 | S11 | S12 | O7 | O8 | O9 | G5 | G6 |
| | UHD | S13 | S14 | S15 | S16 | O10 | O11 | O12 | G7 | G8 |
| SECOND REFERENCE MODEL | SD | SA1 | SA2 | | | OA1 | | | | |
| | HD | SA3 | SA4 | SA5 | | OA4 | OA5 | OA6 | GA1 | GA2 |
| | FHD | SA6 | SA7 | | | OA7 | | | GA3 | GA4 |
| | UHD | SA8 | | | | | | | GA5 | |

EP 4 779 555 A1

QUALITY B

S5    S6

SA3   SA4

S7   SA5   S8

QUALITY A

702

# FIG. 8

FIRST IMAGE → **IMAGE QUALITY PROCESSOR** (830) → SECOND IMAGE

100

UPDATED MODEL

FIRST MODEL DB — 860

820 — MODEL TRAINER — MODEL → ADDITIONAL MODEL SELECTOR (850)

SECOND MODEL DB — 870

QUALITY

810 — QUALITY ANALYSIS UNIT — QUALITY → CUMULATIVE QUALITY ANALYZER (840)

CUMULATIVE QUALITY

EP 4 779 555 A1

# FIG. 9

EP 4 779 555 A1

# FIG. 10

101
FIRST IMAGE
PROCESSING DEVICE

200
SERVER

102
SECOND IMAGE
PROCESSING DEVICE

GENERATE SECOND REFERENCE
MODEL CORRESPONDING TO
QUALITY OF INPUT IMAGE —1010

1020
SECOND REFERENCE MODEL

1030
STORE SECOND
REFERENCE MODEL

1040
DETERMINE MODEL STORING
CONDITION CORRESPONDING
TO CUMULATIVE QUALITY
OF INPUT IMAGES

1050
MODEL STORING CONDITION

SECOND REFERENCE MODEL
CORRESPONDING TO MODEL
STORING CONDITION—1060

1070
GENERATE, BASED ON SECOND
REFERENCE MODEL, TARGET MODEL
CORRESPONDING TO INPUT IMAGE

# FIG. 11

100

IMAGE PROCESSING DEVICE

1120
MEMORY

1130
COMMUNICATION INTERFACE

1110
PROCESSOR

# FIG. 12

1200

1240 TUNER

1210 PROCESSOR

1280 VIDEO PROCESSOR

1250 COMMUNICATION INTERFACE

1220 DISPLAY

1230 DETECTOR
1231 MICROPHONE
1232 CAMERA
1233 LIGHT RECEIVER

1285 AUDIO PROCESSOR

1260 AUDIO OUTPUT INTERFACE

1295 POWER SUPPLY

1290 MEMORY

1270 I/O INTERFACE

# EP 4 779 555 A1

## INTERNATIONAL SEARCH REPORT

International application No.

**PCT/KR2024/015106**

### A. CLASSIFICATION OF SUBJECT MATTER

**G06T 1/60**(2006.01)i; **G06T 1/20**(2006.01)i; **G06T 3/4076**(2024.01)i; **G06T 3/4046**(2024.01)i; **H04N 21/45**(2011.01)i

According to International Patent Classification (IPC) or to both national classification and IPC

### B. FIELDS SEARCHED

Minimum documentation searched (classification system followed by classification symbols)

G06T 1/60(2006.01); G05B 23/02(2006.01); G06N 3/00(2006.01); G06N 3/04(2006.01); G06N 3/08(2006.01); G06T 7/00(2006.01); G06T 7/62(2017.01); H04N 21/442(2011.01); H04N 21/466(2011.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 컨텐츠(contents), 시청 빈도(viewing frequency), 누적(accumulate), 품질(quality), 모델(model), 학습(learning), 저장(storage), 분류(categorization), 영상(picture)

### C. DOCUMENTS CONSIDERED TO BE RELEVANT

| Category* | Citation of document, with indication, where appropriate, of the relevant passages | Relevant to claim No. |
|---|---|---|
| A | KR 10-2022-0014715 A (SAMSUNG ELECTRONICS CO., LTD.) 07 February 2022 (2022-02-07)<br>See claims 1-10. | 1-15 |
| A | KR 10-2023-0135038 A (BOE TECHNOLOGY GROUP CO., LTD. et al.) 22 September 2023 (2023-09-22)<br>See claims 1-15. | 1-15 |
| A | KR 10-2097741 B1 (DEEPNOID CO., LTD.) 06 April 2020 (2020-04-06)<br>See claims 1 and 4-5. | 1-15 |
| A | JP 2020-027386 A (JTEKT CORP.) 20 February 2020 (2020-02-20)<br>See claims 1-7. | 1-15 |
| A | KR 10-2020-0003444 A (SAMSUNG ELECTRONICS CO., LTD.) 10 January 2020 (2020-01-10)<br>See claims 1-8. | 1-15 |

☐ Further documents are listed in the continuation of Box C.      ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **08 January 2025** | **09 January 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/015106**

| Patent document cited in search report | | | Publication date (day/month/year) | Patent family member(s) | | | Publication date (day/month/year) |
|---|---|---|---|---|---|---|---|
| KR | 10-2022-0014715 | A | 07 February 2022 | US | 11989868 | B2 | 21 May 2024 |
| | | | | US | 2022-0036536 | A1 | 03 February 2022 |
| | | | | WO | 2022-025423 | A1 | 03 February 2022 |
| KR | 10-2023-0135038 | A | 22 September 2023 | EP | 4141786 | A1 | 01 March 2023 |
| | | | | EP | 4141786 | A4 | 09 August 2023 |
| | | | | JP | 2024-504529 | A | 01 February 2024 |
| | | | | US | 2023-0048386 | A1 | 16 February 2023 |
| | | | | US | 2023-0206420 | A1 | 29 June 2023 |
| | | | | WO | 2022-160222 | A1 | 04 August 2022 |
| KR | 10-2097741 | B1 | 06 April 2020 | None | | | |
| JP | 2020-027386 | A | 20 February 2020 | JP | 7271872 | B2 | 12 May 2023 |
| KR | 10-2020-0003444 | A | 10 January 2020 | CN | 110674919 | A | 10 January 2020 |
| | | | | CN | 110674919 | B | 22 October 2024 |
| | | | | EP | 3591581 | A1 | 08 January 2020 |
| | | | | EP | 3591581 | B1 | 10 May 2023 |
| | | | | US | 11514692 | B2 | 29 November 2022 |
| | | | | US | 2020-0005098 | A1 | 02 January 2020 |

Form PCT/ISA/210 (patent family annex) (July 2022)